# EUROPEAN PATENT APPLICATION

(11) **EP 4 712 450 A1**
(43) Date of publication of application: **18.03.2026**
(21) Application number: 24802584.3
(22) Date of filing: 08.03.2024
(51) Int. Cl.: H04L 67/60

(54) **DISTRIBUTED NETWORK SELECTION METHOD AND DEVICE BASED ON COMPUTING POWER, AND READABLE STORAGE MEDIUM**

(30) Priority: 06.05.2023 CN 202310507546
(71) Applicant: Datang Mobile Communications Equipment Co., Ltd., Beijing 100085 (CN)
(72) Inventor: GU, Xiaofei, Beijing 100085 (CN); CHENG, Zhimi, Beijing 100085 (CN); WANG, Yapeng, Beijing 100085 (CN); SONG, Yaqin, Beijing 100085 (CN)
(74) Representative: Studio Torta S.p.A.
(86) International application number: PCT/CN2024/080677
(87) International publication number: WO 2024/230296

(57) **Abstract**

The present disclosure provides a computing resources-based distributed network selection method and apparatus, and a readable storage medium. The method includes: acquiring computing-resource information of computing-resource nodes from a computing-resource orchestration center or receiving computing-resource information of computing-resource nodes sent by the computing-resource orchestration center; determining a target RAN side according to the computing-resource information of the computing-resource nodes, and sending a first message to the target RAN side, where the target RAN side is configured to determine a target network node to be accessed according to received computing-resource information of each network node in the first message or pre-configured computing-resource information of at least one network node locally, and send a second message to the target network node; and if a fourth message sent by the target RAN side is received, performing a network registration operation. The method enables reasonable and effective selection of network nodes, thereby effectively providing services for a terminal.

## Description

This application claims priority to Chinese Patent Application No. 202310507546.5, filed to the China National Intellectual Property Administration on May 06, 2023 and entitled "COMPUTING RESOURCES-BASED DISTRIBUTED NETWORK SELECTION METHOD AND APPARATUS, AND READABLE STORAGE MEDIUM", which is hereby incorporated by reference in its entirety.

### TECHNICAL FIELD

The present disclosure relates to the field of communication technologies and, in particular, to a computing resources-based distributed network selection method and apparatus, and a readable storage medium.

### BACKGROUND

An important trend in 6G network development is a centralized and distributed network architecture. An initial design of a network architecture for 5G and previous generations is centrally controlled. 6G will face diverse scenarios and network requirements in air, space, ground, and sea. A centralized network architecture cannot uniformly meet all scenarios. Therefore, with the development of networks and facing the dual driving forces of service scenarios and technological advancements, a 6G network architecture needs to surpass centralized control and gradually evolve towards a distributed architecture, extending more networks to the network edge and establishing distributed isomorphic micro-cloud units with different functional levels. Each micro-cloud unit is self-contained and has all functions for complete control and data forwarding. Multiple micro-cloud units can form autonomous micro-networks according to service requirements, and provide targeted network services according to specific service scenarios, user scale, geographical environment, and other demands. Where the aforementioned micro-cloud units are also called distributed network nodes, representing an on-demand customized or fully functional core network.

With the distribution of intelligence and the distributed development of cloud computing, new connections and new networks are also required to move towards distributed network selection methods. Currently, an existing distributed network selection method involves configuring information of relevant network nodes on a terminal side or a radio access network (Radio Access Network, RAN) side for network node selection. However, in the circumstances of deep integration of computing-network and coexistence of multiple network nodes, the network node selection method cannot be applied.

Therefore, in the prior art, for the 6G distributed architecture, under the circumstances of deep integration of computing-network and coexistence of multiple network nodes, it is impossible to reasonably and effectively select a network node.

### SUMMARY

The present disclosure provides a computing resources-based distributed network selection method and apparatus, and a readable storage medium, which solves the technical problem in the prior art that, for the 6G distributed architecture, under the circumstances of deep integration of computing-network and coexistence of multiple network nodes, it is impossible to reasonably and effectively select a network node.

In a first aspect, the present disclosure provides a computing resources-based distributed network selection method. The method is applied to a terminal, and the method includes:
acquiring computing-resource information of computing-resource nodes from a computing-resource orchestration center or receiving computing-resource information of computing-resource nodes sent by the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier;
determining a target RAN side according to the computing-resource information of the computing-resource nodes, and sending a first message to the target RAN side, where the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node;
if a fourth message sent by the target RAN side is received, performing a network registration operation; where the fourth message is used for indicating agreeing that the terminal accesses the target network node through the target RAN side and the fourth message is determined to be sent when the target RAN side receives a third message sent by the target network node, where the third message is used for indicating agreeing that the target RAN side accesses the target network node.

In the embodiment of the present disclosure, the terminal acquires the computing-resource information of the computing-resource nodes (i.e., the RAN side and/or the network nodes) from the computing-resource orchestration center, or the computing-resource orchestration center sends the computing-resource information of the computing-resource nodes to the terminal. The terminal determines the target RAN side according to whether the computing-resource nodes include a RAN side, and sends a first message (i.e., an access request or a computing-resource information sending request) to the target RAN side. After receiving the first message, according to computing-resource size, etc., in the computing-resource information of the computing-resource nodes carried in the first message or computing-resource size, etc., in pre-configured computing-resource information of at least one network node locally, the target RAN side selects a target network node from the network nodes carried in the first message or from the at least one network node pre-configured locally and sends a second message (i.e., an access request) to the target network node. If the target network node agrees with access, it sends a third message (i.e., an access response indicating that the target RAN side is allowed to access the target network node) to the target network node. After the target RAN side receives the access response, it sends a fourth message (i.e., an access response indicating that the terminal is allowed to access the target network node through the target RAN side) to the terminal. After receiving the access response, the terminal initiates a registration process. It achieves a selection of network nodes based on a computing-resource situation of the RAN side and/or the network nodes, thereby effectively providing a service for the terminal.

Optionally, the determining the target RAN side according to the computing-resource information of the computing-resource nodes includes:
if the computing-resource nodes at least include a RAN side, determining a target RAN side to be accessed according to computing-resource information of each RAN side, where the first message is used for indicating that the terminal requests to access the target RAN side;
if the computing-resource nodes include a network node and do not include a RAN side, the target RAN side is a RAN side pre-accessed by the terminal, where the first message is used for indicating that the terminal requests to send computing-resource information, and the first message includes computing-resource information of each network node in the acquired or received computing-resource nodes.

In the embodiments of the present disclosure, if the computing-resource information acquired by the terminal from the computing-resource orchestration center at least includes the RAN side (i.e., the computing-resource nodes include the RAN side or the computing-resource nodes include the RAN side and the network nodes) or the received computing-resource information of the computing-resource nodes sent by the computing-resource orchestration center at least includes the RAN side (i.e., the computing-resource nodes include the RAN side or the computing-resource nodes include the RAN side and the network nodes), then a suitable RAN side (i.e., the target RAN side) is selected from the acquired or received at least one RAN side according to the acquired or received computing-resource information of the at least one RAN side, and an access request is sent to the target RAN side. If the computing-resource information acquired by the terminal from the computing-resource orchestration center includes a network node but does not include a RAN side, or the received computing-resource information of the computing-resource nodes sent by the computing-resource orchestration center is the computing-resource information of the network node, then the terminal has pre-accessed a RAN side (referring to the target RAN side herein) and sends a computing-resource information request to the already accessed RAN side.

Optionally, if the acquired or received computing-resource nodes include a RAN side and do not include a network node, and when the first message includes pre-configured computing-resource information of at least one network node in the terminal, the target RAN side is configured to determine a target network node to be accessed according to the pre-configured computing-resource information of the at least one network node in the terminal; and when the first message does not include computing-resource information of a network node, the target RAN side is configured to determine a target network node to be accessed according to the pre-configured computing-resource information of the at least one network node locally;
if the acquired or received computing-resource nodes at least include a network node, the target RAN side is configured to determine a target network node to be accessed according to received computing-resource information of each network node included in the first message.

In the embodiment of the present disclosure, according to whether the computing-resource information of the computing-resource nodes acquired from or received from the computing-resource orchestration center is the computing-resource information of the RAN side, or the computing-resource information of the RAN side and the network nodes, or the computing-resource information of network nodes, the terminal determines the target RAN side and whether this target RAN side is selected from the computing-resource nodes or is pre-accessed, , and sends a first message to the target RAN side. After receiving the first message, the target RAN side selects a suitable network node (i.e., the target network node) according to computing-resource information of each network node carried in the first message (where the computing-resource information of each network node carried in the first message may be the computing-resource information of network nodes acquired by the terminal from the computing-resource orchestration center or received from the computing-resource orchestration center, or pre-configured computing-resource information of at least one network node in the terminal) or the pre-configured computing-resource information of each network node locally.

Optionally, the network node includes a distributed network node and a centralized network node.

Optionally, before acquiring the computing-resource information of the computing-resource nodes from the computing-resource orchestration center or receiving the computing-resource information of the computing-resource nodes sent by the computing-resource orchestration center, the method further includes:
sending a fifth message to the computing-resource orchestration center, where the fifth message is used for indicating a request to subscribe to computing-resource size updated in real time by each computing-resource node; where the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

In the embodiment of the present disclosure, the terminal may subscribe to a message about network data (including at least the computing-resource size) updated in real-time by each computing-resource node from the computing-resource orchestration center. The computing-resource orchestration center monitors the network data of each computing-resource node in real time and updates it in real time. After the network data of one or some computing-resource nodes is updated, the network data updated in real time by the computing-resource nodes is sent to the terminal. The terminal selects the RAN side according to the network data updated in real time by the computing-resource nodes or sends the network data updated in real time by the computing-resource nodes to the target RAN side. The target RAN side selects a suitable network node (i.e., the target network node) according to the network data updated in real time by the computing-resource nodes, or the pre-configured computing-resource information of each network node in the terminal, or the pre-configured computing-resource information of each network node locally.

Optionally, applied to an extended reality (XR) service scenario, and the determining the target RAN side according to the computing-resource information of the computing-resource nodes further includes:
determining the target RAN side according to the computing-resource nodes, computing-resource requirement information of the XR service scenario, and the computing-resource information; where the target RAN side is configured to determine the target network node to be accessed according to the received computing-resource information of each network node in the first message or the pre-configured computing-resource information of at least one network node locally and the computing-resource requirement information.

In the embodiment of the present disclosure, when the terminal acquires the computing-resource information of the RAN side and the network nodes from the computing-resource orchestration center, it may select a suitable RAN and network node according to computing-resource requirements of an accessed XR service, i.e., select the RAN and the network node that meet the requirements of the XR service.

Optionally, the computing-resource information further includes: locations of the computing-resource nodes and/or network performance parameters.

In the embodiment of the present disclosure, the terminal may comprehensively select a suitable RAN side (i.e., the target RAN side) based on the computing-resource size, combined with the locations of computing-resource nodes and/or the network performance parameters; and the target RAN side may comprehensively select a suitable network node (i.e., the target network node) according to the computing-resource size, combined with the locations of the computing-resource nodes and/or the network performance parameters.

In a second aspect, the present disclosure provides a computing resources-based distributed network selection apparatus, applied to a target RAN side, where the target RAN side is a RAN side determined to be accessed by a terminal or a RAN side pre-accessed by a terminal, and the method includes:
receiving a first message sent by the terminal, where the first message is used for indicating that the terminal requests to access the target RAN side or that the terminal requests to send computing-resource information of each network node; the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
determining a target network node to be accessed according to received computing-resource information of each network node in the first message or pre-configured computing-resource information of at least one network node locally, and sending a second message to the target network node, where the second message is used for indicating that the target RAN side requests to access the target network node;
if a third message sent by the target network node is received, sending a fourth message to the terminal, where the third message is used for indicating agreeing that the target RAN side accesses the target network node, and the fourth message is used for indicating agreeing that the terminal accesses the target network node through the target RAN side;
where the terminal is configured to, when receiving the fourth message, perform a network registration operation.

In the embodiment of the present disclosure, the target RAN side receives the first message sent by the terminal, and according to computing-resource size, etc., in the computing-resource information of computing-resource nodes carried in the first message or according to computing-resource size, etc., in pre-configured computing-resource information of at least one network node locally, the target RAN side selects a target network node from the network nodes carried in the first message or from the at least one network node pre-configured locally and sends a second message (i.e., an access request) to the target network node. If the target network node agrees with access, it sends a third message (i.e., an access response indicating that the target RAN side is allowed to access the target network node) to the target network node. After the target RAN side receives the access response, it sends a fourth message (i.e., an access response indicating that the terminal is allowed to access the target network node through the target RAN side) to the terminal. After receiving the access response, the terminal initiates a registration process. It achieves a selection of network nodes based on a computing-resource situation of the RAN side and/or the network nodes, thereby effectively providing a service for the terminal.

Optionally, if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message includes computing-resource information of each network node in the computing-resource nodes acquired or received by the terminal.

Optionally, the determining the target network node to be accessed according to the received computing-resource information of each network node in the first message or the pre-configured computing-resource information of at least one network node locally includes:
if the first message includes computing-resource information of at least one network node, determining the target network node to be accessed according to the computing-resource information of the at least one network node in the first message, where the computing-resource information of the at least one network node in the first message is acquired or received by the terminal, or pre-configured in the terminal;
if the first message does not include computing-resource information of a network node, determining the target network node to be accessed according to the pre-configured computing-resource information of at least one network node locally.

Optionally, the network node includes a distributed network node and a centralized network node.

Optionally, the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, applied to an extended reality (XR) service scenario, and if the target RAN side is determined by the terminal according to the computing-resource nodes, computing-resource requirement information of the XR service scenario, and the computing-resource information, the determining the target network node to be accessed according to the received computing-resource information in the first message or the pre-configured computing-resource information of at least one network node locally further includes:
determining the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

In a third aspect, the present disclosure provides a computing resources-based distributed network selection method, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal, the computing-resource information includes computing-resource size, computing-resource service provided for the terminal, and a computing-resource node identifier. The method includes:
receiving a third message sent by the target RAN side, where the third message is used for indicating agreeing that the target RAN side accesses the target network node;
sending a fourth message to the target RAN side, where the fourth message is used for indicating agreeing that the terminal accesses the target network node through the target RAN side.

In a fourth aspect, the present disclosure provides a computing resources-based distributed network selection apparatus, where the apparatus is applied in a terminal, and the apparatus includes a memory, a transceiver, and a processor:
where the memory is configured to store a computer program; the transceiver is configured to transmit and receive data under control of the processor; and the processor is configured to read the computer program in the memory and perform the following operations:
acquiring computing-resource information of computing-resource nodes from a computing-resource orchestration center or receiving computing-resource information of computing-resource nodes sent by the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier;
determining a target RAN side according to the computing-resource information of the computing-resource nodes, and sending a first message to the target RAN side, where the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node;
if a fourth message sent by the target RAN side is received, performing a network registration operation; where the fourth message is used for indicating agreeing that the terminal accesses the target network node through the target RAN side and the fourth message is determined to be sent when the target RAN side receives a third message sent by the target network node, where the third message is used for indicating agreeing that the target RAN side accesses the target network node.

Optionally, the processor, when configured to determine the target RAN side according to the computing-resource information of the computing-resource nodes, specifically includes:
if the computing-resource nodes at least include a RAN side, determining a target RAN side to be accessed according to computing-resource information of each RAN side, where the first message is used for indicating that the terminal requests to access the target RAN side;
if the computing-resource nodes include a network node and do not include a RAN side, the target RAN side is a RAN side pre-accessed by the terminal, where the first message is used for indicating that the terminal requests to send computing-resource information, and the first message includes computing-resource information of each network node in the acquired or received computing-resource nodes.

Optionally, if the acquired or received computing-resource nodes include a RAN side and do not include a network node, and when the first message includes pre-configured computing-resource information of at least one network node in the terminal, the target RAN side is configured to determine a target network node to be accessed according to the pre-configured computing-resource information of the at least one network node in the terminal; and when the first message does not include computing-resource information of a network node, the target RAN side is configured to determine a target network node to be accessed according to the pre-configured computing-resource information of the at least one network node locally;
if the acquired or received computing-resource nodes at least include a network node, the target RAN side is configured to determine a target network node to be accessed according to received computing-resource information of each network node included in the first message.

Optionally, the network node includes a distributed network node and a centralized network node.

Optionally, the processor, before acquiring the computing-resource information of the computing-resource nodes from the computing-resource orchestration center or receiving the computing-resource information of the computing-resource nodes sent by the computing-resource orchestration center, specifically includes:
sending a fifth message to the computing-resource orchestration center, where the fifth message is used for indicating a request to subscribe to computing-resource size updated in real time by each computing-resource node; where the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, applied to an extended reality (XR) service scenario; and the processor, when configured to determine the target RAN side according to the computing-resource information of the computing-resource nodes, further specifically includes:
determining the target RAN side according to the computing-resource nodes, computing-resource requirement information of the XR service scenario, and the computing-resource information; where the target RAN side is configured to determine the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

In a fifth aspect, the present disclosure provides a computing resources-based distributed network selection apparatus, where the apparatus is applied to a target RAN side, and the target RAN side is a RAN side determined to be accessed by a terminal or a RAN side pre-accessed by a terminal. The apparatus includes: a memory, a transceiver, and a processor:
where the memory is configured to store a computer program; the transceiver is configured to transmit and receive data under control of the processor; and the processor is configured to read the computer program in the memory and perform the following operations:
receiving a first message sent by the terminal, where the first message is used for indicating that the terminal requests to access the target RAN side or that the terminal requests to send computing-resource information of each network node; the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
determining a target network node to be accessed according to received computing-resource information of each network node in the first message or pre-configured computing-resource information of at least one network node locally, and sending a second message to the target network node; where the second message is used for indicating that the target RAN side requests to access the target network node;
if a third message sent by the target network node is received, sending a fourth message to the terminal; where the third message is used for indicating agreeing that the target RAN side accesses the target network node, the fourth message is used for indicating agreeing that the terminal accesses the target network node through the target RAN side;
where the terminal is configured to, when receiving the fourth message, perform a network registration operation.

Optionally, if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message includes computing-resource information of each network node in the computing-resource nodes acquired or received by the terminal.

Optionally, the processor, when configured to determine the target network node to be accessed according to the received computing-resource information of each network node in the first message or the pre-configured computing-resource information of at least one network node locally, specifically includes:
if the first message includes computing-resource information of at least one network node, determining the target network node to be accessed according to the computing-resource information of the at least one network node in the first message, where the computing-resource information of the at least one network node in the first message is acquired or received by the terminal, or pre-configured in the terminal;
if the first message does not include computing-resource information of a network node, determining the target network node to be accessed according to the pre-configured computing-resource information of at least one network node locally.

Optionally, the network node includes a distributed network node and a centralized network node.

Optionally, the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, applied to an extended reality (XR) service scenario; and if the target RAN side is determined by the terminal according to the computing-resource nodes, computing-resource requirement information of the XR service scenario, and the computing-resource information, the processor, when configured to determine the target network node to be accessed according to the received computing-resource information of each network node in the first message or the pre-configured computing-resource information of at least one network node locally, further includes:
determining the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

In a sixth aspect, the present disclosure provides a computing resources-based distributed network selection apparatus, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal. The computing-resource information includes a computing-resource size, computing-resource service provided for the terminal, and a computing-resource node identifier. The apparatus includes a memory, a transceiver and a processor:
where the memory is configured to store a computer program; the transceiver is configured to transmit and receive data under control of the processor; and the processor is configured to read the computer program in the memory and perform the following operations:
receiving a third message sent by the target RAN side, where the third message is used for indicating agreeing that the target RAN side accesses the target network node;
sending a fourth message to the target RAN side, where the fourth message is used for indicating agreeing that the terminal accesses the target network node through the target RAN side.

In a seventh aspect, the present disclosure provides a computing resources-based distributed network selection apparatus, where the apparatus is applied in a terminal, and the apparatus includes:
a processing unit, configured to acquire computing-resource information of computing-resource nodes from a computing-resource orchestration center or receiving computing-resource information of computing-resource nodes sent by the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier;
a determining unit, configured to determine a target RAN side according to the computing-resource information of the computing-resource nodes, and send a first message to the target RAN side, where the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node;
a registration unit, configured to, when a fourth message sent by the target RAN side is received, perform a network registration operation; where the fourth message is used for indicating agreeing that the terminal accesses the target network node through the target RAN side and the fourth message is determined to be sent when the target RAN side receives a third message sent by the target network node, where the third message is used for indicating agreeing that the target RAN side accesses the target network node.

In an eighth aspect, the present disclosure provides a computing resources-based distributed network selection apparatus, where the apparatus is applied to a target RAN side, and the target RAN side is a RAN side determined to be accessed by a terminal or a RAN side pre-accessed by a terminal. The apparatus includes:
a receiving unit, configured to receive a first message sent by the terminal, where the first message is used for indicating that the terminal requests to access the target RAN side or that the terminal requests to send computing-resource information of each network node; and the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
a determining unit, configured to determine a target network node to be accessed according to received computing-resource information of each network node in the first message or pre-configured computing-resource information of at least one network node locally, and sending a second message to the target network node; where the second message is used for indicating that the target RAN side requests to access the target network node;
a sending unit, configured to, when a third message sent by the target network node is received, send a fourth message to the terminal, where the third message is used for indicating agreeing that the target RAN side accesses the target network node, and the fourth message is used for indicating agreeing that the terminal accesses the target network node through the target RAN side;
where the terminal is configured to, when receiving the fourth message, perform a network registration operation.

In a ninth aspect, the present disclosure provides a computing resources-based distributed network selection apparatus, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal. The computing-resource information includes a computing-resource size, computing-resource service provided for the terminal, and a computing-resource node identifier. The apparatus includes:
a receiving unit, configured to receive a third message sent by the target RAN side, where the third message is used for indicating agreeing that the target RAN side accesses the target network node;
a sending unit, configured to send a fourth message to the target RAN side, where the fourth message is used for indicating agreeing that the terminal accesses the target network node through the target RAN side.

In a tenth aspect, the present disclosure provides a non-transitory readable storage medium, where the non-transitory readable storage medium stores a computer program, and the computer program is configured to cause a processor to perform the method according to any one of the above.

The present disclosure provides the computing resources-based distributed network selection method and apparatus, and the readable storage medium. The computing-resource information of the computing-resource nodes (i.e., the RAN side and/or the network nodes) is acquired from the computing-resource orchestration center, or the computing-resource information of the computing-resource nodes sent by the computing-resource orchestration center is received. A target RAN side is determined according to whether the computing-resource nodes include a RAN side, and a first message is sent to the target RAN side. After receiving the first message, according to computing-resource size, etc., in the computing-resource information of the computing-resource nodes carried in the first message or computing-resource size, etc., in pre-configured computing-resource information of at least one network node locally, the target RAN side selects a target network node from the network nodes carried in the first message or from the at least one network node pre-configured locally and sends a second message to the target network node. If the target network node agrees with access, it sends a third message. After the target RAN side receives the access response, it sends a fourth message to the terminal. After receiving the access response, the terminal initiates a registration process. It achieves a selection of network nodes based on a computing-resource situation of the RAN side and/or the network nodes, thereby effectively providing a service for the terminal.

It should be understood that what is described in the above Summary section is not intended to limit key or important features of the embodiments of the present invention, nor is it intended to limit the scope of the present invention. Other features of the present invention will be readily understood by the following description.

### BRIEF DESCRIPTION OF DRAWINGS

In order to explain technical solutions of the present disclosure or in the prior art more clearly, the drawings that need to be used in the description of embodiments or in the prior art will be briefly introduced in the following. Obviously, the drawings in the following description are some embodiments of the present invention, and for those of ordinary skill in the art, other drawings can be obtained according to these drawings without paying creative effort.
FIG. 1 is a schematic flowchart of a computing resources-based distributed network selection method according to an embodiment of the present disclosure.
FIG. 2 is a schematic signaling flowchart of a computing resources-based distributed network selection method according to an embodiment of the present disclosure.
FIG. 3 is a schematic signaling flowchart of a computing resources-based distributed network selection method according to another embodiment of the present disclosure.
FIG. 4 is a schematic signaling flowchart of a computing resources-based distributed network selection method according to yet another embodiment of the present disclosure.
FIG. 5 is a schematic signaling flowchart of a computing resources-based distributed network selection method according to still another embodiment of the present disclosure.
FIG. 6 is a schematic signaling flowchart of a computing resources-based distributed network selection method according to a further embodiment of the present disclosure.
FIG. 7 is a schematic signaling flowchart of a computing resources-based distributed network selection method according to yet a further embodiment of the present disclosure.
FIG. 8 is a schematic flowchart of a computing resources-based distributed network selection method according to another embodiment of the present disclosure.
FIG. 9 is a schematic structural diagram of a computing resources-based distributed network selection apparatus according to an embodiment of the present disclosure.
FIG. 10 is a schematic structural diagram of a computing resources-based distributed network selection apparatus according to another embodiment of the present disclosure.
FIG. 11 is a schematic structural diagram of a computing resources-based distributed network selection apparatus according to still another embodiment of the present disclosure.
FIG. 12 is a schematic structural diagram of a computing resources-based distributed network selection apparatus according to yet another embodiment of the present disclosure.

### DESCRIPTION OF EMBODIMENTS

In the present disclosure, the term "and/or" describes an association relationship of associated objects, indicating that there may be three kinds of relationships. For example, A and/or B can indicate three cases, i.e., A exists alone, A and B exist at the same time, and B exists alone. The character "/" generally indicates that associated objects before and after the character is of an "OR" relationship.

In embodiments of the present disclosure, the term "plurality" refers to two or more, and other quantifiers are similar.

The technical solutions in the embodiments of the present disclosure will be described clearly and comprehensively with reference to the drawings in the embodiments of the present disclosure. Obviously, the described embodiments are only some of the embodiments of the present disclosure, rather than all of them. Based on the embodiments of the present disclosure, all other embodiments obtained by those of ordinary skill in the art without creative effort belong to the protection scope of the present disclosure.

To clearly understand the technical solutions of the present disclosure, solutions in the prior art are first introduced in detail. The trend of future 6G networks is a decentralized hierarchical network with centralized and distributed collaboration. 6G networks are organized through centralized and distributed collaboration and distributed autonomy. On one hand, it extends more network functions to an network edge, on the other hand, it centralize core functions facing a whole situation and supports more complex services through cloud-network integration and distributed collaboration.

During network deployment, there will be multiple network nodes (centralized nodes and distributed nodes). Furthermore, as computing-resource factors are incorporated into a mobile communication network, using computing to assist the network, it provides a mobile connection capability of high-quality computing-network collaboration. Therefore, the deep integration of mobile communication network and computing resources is one of the development trends of mobile communication network. However, existing distributed network selection methods involve configuring information of relevant network nodes on a terminal side or RAN side for network node selection. In the circumstances of deep integration of computing-network and coexistence of multiple network nodes, this network node selection method cannot be applied.

Therefore, in the prior art, for the 6G distributed architecture, under the circumstances of deep integration of computing-network and coexistence of multiple network nodes, it is impossible to reasonably and effectively select a network node.

The inventors further found through research that, to achieve reasonable and effective network selection under the circumstances of deep integration of computing-network and the coexistence of multiple network nodes, the terminal can acquire computing-resource information of computing-resource nodes (RAN side and/or network nodes) from a computing-resource orchestration center, or the computing-resource orchestration center sends computing-resource information of the RAN side and/or network nodes to the terminal. The terminal then selects a network node based on the acquired or received computing-resource information, thereby effectively providing a service for the terminal.

Therefore, based on the aforementioned creative research of the inventors, a computing resources-based distributed network selection method and apparatus are proposed in the present disclosure. In the present disclosure, by acquiring computing-resource information of computing-resource nodes from a computing-resource orchestration center or receiving computing-resource information of computing-resource nodes sent by the computing-resource orchestration center, a target RAN side is determined, i.e., a RAN to be accessed selected by the terminal or a pre-accessed RAN. Then, an access request or a computing-resource information sending request is sent to the target RAN side (this request is based on that the RAN side is pre-accessed and then this request is sent). Then, the target RAN side, based on computing-resource information of each network node in the first message or pre-configured computing-resource information of network nodes, determines a target network node and sends an access request to the target network node. If the target RAN side receives an access response agreeing with access, it sends an access response agreeing with access to the terminal. After receiving this response, the terminal initiates a registration process. It achieves a selection of network nodes based on a computing-resource situation of the RAN side and/or the network nodes, thereby effectively providing a service for the terminal.

The method and the apparatus are based on the same application concept, and since the method and the apparatus solve the problem on similar principles, the implementation of the apparatus and the method can be referred to each other, and the repetition is not described here.

Embodiments of the present disclosure will be described below with reference to the drawings.

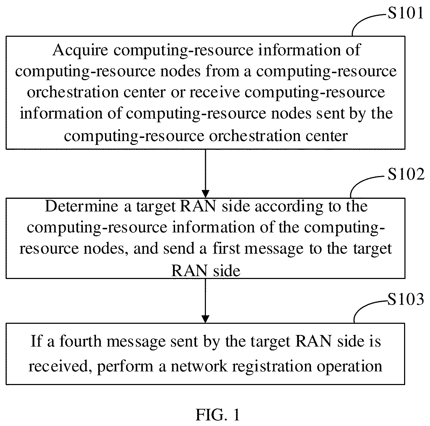

FIG. 1 is a schematic flowchart of a computing resources-based distributed network selection method according to an embodiment of the present disclosure. As shown in FIG. 1, an execution subject of the computing resources-based distributed network selection method provided in this embodiment is a terminal (or a terminal device).

The terminal device involved in the embodiments of the present disclosure may be a device that provides voice and/or data connectivity to a user, a handheld device with a wireless connection function, or other processing devices connected to a wireless modem, etc. In different systems, names of the terminal devices may be different. For example, in a 5G system, the terminal device may be called user equipment (User Equipment, UE). The wireless terminal device can communicate with one or more core networks (Core Network, CN) via a radio access network (Radio Access Network, RAN). The wireless terminal device may be a mobile terminal device, such as a mobile phone (or a "cellular" phone) and a computer with a mobile terminal device, such as a portable, pocket-sized, hand-held, computer-built or vehicle-mounted mobile device, which exchanges language and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices. The wireless terminal device may also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

The computing resources-based distributed network selection method provided by the embodiments of the present disclosure includes the following steps.

Step 101, acquire computing-resource information of computing-resource nodes from a computing-resource orchestration center or receive computing-resource information of computing-resource nodes sent by the computing-resource orchestration center.

The computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier.

Optionally, the network node includes a distributed network node and a centralized network node.

In this embodiment, first, the RAN side and the network nodes register their computing-resource information with the computing-resource orchestration center. The registration information includes computing-resource size, computing-resource service (provided for the terminal), node identifiers, locations, network performance parameters (e.g., signal strength and coverage of the RAN side, scale of the network node, etc.). The computing-resource orchestration center monitors network data (including at least the computing-resource size, and may also include the network performance parameters, etc.) of the computing-resource nodes in real time and updates the network data in real time.

Specifically, the terminal may acquire the computing-resource information of the computing-resource nodes (the RAN side and/or the network nodes) from the computing-resource orchestration center, or the computing-resource orchestration center sends computing-resource information of the RAN side and/or the network nodes to the terminal. Herein, the computing-resource information may include computing-resource size, computing-resource service provided for the terminal, and a computing-resource node identifier.

Step 102, determine a target RAN side according to the computing-resource information of the computing-resource nodes, and send a first message to the target RAN side.

The first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node.

In this embodiment, it is determined whether the acquired or received computing-resource nodes include computing-resource information of a RAN according to the computing-resource node identifier in the computing-resource information of the computing-resource nodes acquired from or sent by the computing-resource orchestration center. If it includes the computing-resource information of the RAN side, a suitable RAN side (e.g., the one with the largest computing resources, which is not specifically limited here; and it may be comprehensively considered based on other computing-resource factors, such as locations, network performance parameters, etc.), i.e., the target RAN side, is selected according to the computing-resource size, etc., in the computing-resource information of each RAN side, and an access request (here referring to a first message indicating that the terminal requests to access the target RAN side) is sent to the target RAN side. Before sending the access request to the target RAN side, information carried in the access request (i.e., the content of the first message) may be determined based on the acquired or received computing-resource information of the computing-resource nodes and whether the terminal has pre-configured computing-resource information of at least one network node locally. If the acquired or received computing-resource information of the computing-resource nodes includes computing-resource information of network nodes, then it is determined that the first message includes the computing-resource information of the network nodes in the acquired or received computing-resource nodes, and the first message is sent to the target RAN side. If the acquired or received computing-resource information of the computing-resource nodes does not include computing-resource information of network nodes, and the terminal has the pre-configured computing-resource information of at least one network node, then it is determined that the first message includes the pre-configured computing-resource information of at least one network node in the terminal. If the acquired or received computing-resource information of the computing-resource nodes does not include computing-resource information of network nodes, and the terminal has not configured the computing-resource information of the network nodes, then it is determined that the first message does not include computing-resource information of any network node.

If it computing-resource informationcomputing-resource nodedoes not include computing-resource information of the RAN side but includes computing-resource information of the network nodes, the terminal sends computing-resource information of each network node acquired from or sent by the computing-resource orchestration center to the pre-accessed RAN side (which is the target RAN side here). The target RAN selects a suitable network node, i.e., the target network node, according to the access request or computing-resource information, and sends an access request to the target network node.

Step 103, if a fourth message sent by the target RAN side is received, perform a network registration operation.

The fourth message is used for indicating agreeing that the terminal accesses the target network node through the target RAN side, and the fourth message is determined to be sent when the target RAN side receives a third message sent by the target network node, where the third message is used for indicating agreeing that the target RAN side accesses the target network node.

In this embodiment, if the target network node sends an access response (here referring to the third message) indicating that the target RAN side is allowed to access the target network node to the target RAN side, the target RAN side sends an access response (here referring to the fourth message) indicating that the terminal is allowed to access the target network node through the target RAN side to the terminal. After receiving the access response sent by the target RAN side, the terminal initiates a network registration process.

Optionally, the computing-resource information further includes: locations of the computing-resource nodes and/or network performance parameters.

In this embodiment, the terminal may comprehensively select a suitable RAN side (i.e., the target RAN side) according the computing-resource size, combined with the location of the computing-resource node (e.g., calculating the distance between the terminal and the RAN side) and/or network performance parameters; and the target RAN side may comprehensively select a suitable network node (i.e., the target network node) according to the computing-resource size, combined with the location of the computing-resource node (e.g., calculating the distance between the target RAN side and the network node) and/or network performance parameters.

In this embodiment, by acquiring the computing-resource information of the computing-resource nodes (i.e., the RAN side and/or the network nodes) from the computing-resource orchestration center or receiving computing-resource information of computing-resource nodes sent by the computing-resource orchestration center, the terminal determines a target RAN side according to whether the acquired or received computing-resource nodes include a RAN side, and sends a first message (i.e., an access request or a computing-resource information sending request) to the target RAN side. After receiving the first message, according to computing-resource size (and possibly combined with locations and/or network performance parameters), etc., in the computing-resource information of the computing-resource nodes carried in the first message or computing-resource size (and possibly combined with locations and/or network performance parameters), etc., in pre-configured computing-resource information of at least one network node locally, the target RAN side selects a target network node from the network nodes carried in the first message or from the at least one network node pre-configured locally and sends a second message (i.e., an access request) to the target network node. If the target network node agrees with access, it sends a third message (i.e., an access response indicating that the target RAN side is allowed to access the target network node) to the target network node. After the target RAN side receives the access response, it sends a fourth message (i.e., an access response indicating that the terminal is allowed to access the target network node through the target RAN side) to the terminal. After receiving the access response, the terminal initiates a registration process. It achieves a selection of network nodes based on a computing-resource situation of the RAN side and/or the network nodes, thereby effectively providing a service for the terminal.

Optionally, before acquiring the computing-resource information of the computing-resource nodes from the computing-resource orchestration center or receiving the computing-resource information of the computing-resource nodes sent by the computing-resource orchestration center, the method further includes:
sending a fifth message to the computing-resource orchestration center, where the fifth message is used for indicating a request to subscribe to computing-resource size updated in real time by each computing-resource node; where the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

In this embodiment, the terminal may subscribe to a message about network data (including at least the computing-resource size) updated in real-time by each computing-resource node from the computing-resource orchestration center. The computing-resource orchestration center monitors the network data of each computing-resource node in real time and updates it in real time. After the network data of one or some computing-resource nodes is updated, the network data updated in real time by the computing-resource nodes is sent to the terminal. The terminal selects the RAN side according to the network data updated in real time by the computing-resource nodes or sends the network data updated in real time by the computing-resource nodes to the target RAN side. The target RAN side selects a suitable network node (i.e., the target network node) according to the network data updated in real time by the computing-resource nodes, or the pre-configured computing-resource information of each network node in the terminal, or the pre-configured computing-resource information of each network node locally.

Optionally, the determining the target RAN side according to the computing-resource information of the computing-resource nodes may be achieved through the following steps:
if the acquired or received computing-resource nodes at least include a RAN side, determining a target RAN side to be accessed according to computing-resource information of each RAN side; where the first message is used for indicating that the terminal requests to access the target RAN side;
if the acquired or received computing-resource nodes include a network node and do not include a RAN side, the target RAN side is a RAN side pre-accessed by the terminal; where the first message is used for indicating that the terminal requests to send computing-resource information, and the first message includes computing-resource information of each network node in the acquired or received computing-resource nodes.

Where the determining the target RAN side to be accessed according to the computing-resource information of each RAN side may include: determining the target RAN side according to computing-resource size and a corresponding identifier in the computing-resource information of each RAN side, and sending the first message to the target RAN side; further, determining the target RAN side according to the computing-resource size (and the corresponding identifier), combined with locations and/or network performance parameters, and sending the first message to the target RAN side.

In this embodiment, if the computing-resource nodes acquired by the terminal from the computing-resource orchestration center or received from the computing-resource orchestration center at least include a RAN side (i.e., if the computing-resource identifier in the acquired or received computing-resource information of the computing-resource nodes includes a RAN side identifier, it means that the acquired or received computing-resource nodes at least include a RAN side), then a target RAN side to be accessed is determined according to the computing-resource information of the computing-resource nodes acquired from or sent by the computing-resource orchestration center, and a message requesting access to the target RAN side is sent to the target RAN side. This message includes at least the computing-resource information of the RAN side.

If the computing-resource nodes acquired by the terminal from the computing-resource orchestration center or sent by the computing-resource orchestration center include network nodes and do not include a RAN side (i.e., if the computing-resource identifier in the acquired or received computing-resource information of the computing-resource nodes include a network node identifier but do not include a RAN side identifier, it means the acquired or received computing-resource nodes include the network nodes and do not include the RAN side), then the computing-resource information of the network nodes acquired from or sent by the computing-resource orchestration center is sent to the pre-accessed RAN side.

The target RAN side is configured to determine the target network node to be accessed according to the received computing-resource information or pre-configured network nodes, and send a message requesting access to the target network node to the target network node.

Specifically, if the computing-resource information acquired by the terminal from the computing-resource orchestration center at least includes a RAN side (i.e., the computing-resource nodes include a RAN side or the computing-resource nodes include a RAN side and network nodes) or the received computing-resource information of the computing-resource nodes sent by the computing-resource orchestration center at least includes a RAN side (i.e., the computing-resource nodes include a RAN side or the computing-resource nodes include a RAN side and network nodes), then a suitable RAN side (i.e., the target RAN side) is selected from the acquired or received at least one RAN side according to the acquired or received computing-resource information of the at least one RAN side, and an access request is sent to the target RAN side. If the computing-resource information acquired by the terminal from the computing-resource orchestration center includes a network node but does not include a RAN side, or the received computing-resource information of the computing-resource nodes sent by the computing-resource orchestration center is the computing-resource information of the network node, then the terminal has pre-accessed a RAN side (referring to the target RAN side herein) and sends a computing-resource information request to the already accessed RAN side.

Optionally, if the acquired or received computing-resource nodes include a RAN side and do not include a network node, and when the first message includes pre-configured computing-resource information of at least one network node in the terminal, the target RAN side is configured to determine a target network node to be accessed according to the pre-configured computing-resource information of the at least one network node in the terminal; and when the first message does not include computing-resource information of a network node, the target RAN side is configured to determine a target network node to be accessed according to the pre-configured computing-resource information of the at least one network node locally;
if the acquired or received computing-resource nodes at least include a network node, the target RAN side is configured to determine a target network node to be accessed according to received computing-resource information of each network node included in the first message.

In this embodiment, according to whether the computing-resource information of the computing-resource nodes acquired from or received from the computing-resource orchestration center is the computing-resource information of the RAN side, or the computing-resource information of the RAN side and the network nodes, or the computing-resource information of network nodes, the terminal determines the target RAN side and whether this target RAN side is selected from the computing-resource nodes or is pre-accessed, and sends a first message to the target RAN side. After receiving the first message, the target RAN side selects a suitable network node (i.e., the target network node) according to computing-resource information of each network node carried in the first message (where computing-resource information of each network node carried in the first message may be the computing-resource information of network nodes acquired by the terminal from the computing-resource orchestration center or received from the computing-resource orchestration center, or pre-configured computing-resource information of at least one network node in the terminal) or the pre-configured computing-resource information of each network node locally.

If the target RAN side is a RAN side pre-accessed by the terminal, after receiving the computing-resource information sending request from the terminal (herein, the computing-resource information is the computing-resource information of the computing-resource nodes acquired by the terminal from the computing-resource orchestration center or received from the computing-resource orchestration center; and the computing-resource information of the computing-resource nodes here includes computing-resource information of network nodes), the target RAN side selects a suitable network node (i.e., the target network node) from the acquired or received at least one network node according to the acquired or received computing-resource information of the at least one network node.

Specifically, according to the computing-resource identifier in the acquired or received computing-resource information of the computing-resource nodes, it is determined whether the acquired or received computing-resource information of the computing-resource nodes includes computing-resource information of the RAN side and/or network nodes. That is, if the computing-resource information acquired by the terminal from the computing-resource orchestration center includes a RAN side but does not include network nodes, or the received computing-resource information of the computing-resource nodes from the computing-resource orchestration center is the computing-resource information of the RAN side, then after selecting a suitable RAN side (i.e., the target RAN side), a first message is sent to the target RAN side. This first message may or may not carry the pre-configured computing-resource information of at least one network node in the terminal. After receiving this first message, the target RAN side selects a suitable network node (i.e., the target network node) according to the pre-configured computing-resource information of at least one network node in the terminal carried in the first message or the pre-configured computing-resource information of at least one network node locally in the target RAN side.

If the computing-resource information acquired by the terminal from the computing-resource orchestration center at least includes network nodes (i.e., the computing-resource nodes include network nodes or the computing-resource nodes include a RAN side and network nodes) or the received computing-resource information of the computing-resource nodes sent by the computing-resource orchestration center at least includes network nodes (i.e., the computing-resource nodes include network nodes or the computing-resource nodes include a RAN side and network nodes), then after selecting a suitable RAN side or having accessed a RAN side (i.e., the target RAN side), a first message is sent to the target RAN side. After receiving this first message, the target RAN side selects a suitable network node (i.e., the target network node) according to the computing-resource information of the at least one network node in the first message.

The computing resources-based distributed network selection method is described in detail below according to three scenarios where the computing-resource information of the computing-resource nodes acquired or received by the terminal includes computing-resource information of the RAN side and/or network nodes.

Scenario 1: if the computing-resource information acquired by the terminal from the computing-resource orchestration center is the computing-resource information of the RAN side, or the computing-resource information of the computing-resource nodes sent by the computing-resource orchestration center to the terminal is the computing-resource information of the RAN side, the terminal selects a suitable RAN side (i.e., the target RAN side) according to the computing-resource information of the RAN side, and sends a first message indicating that the terminal requests to access the target RAN side to the target RAN side. After receiving the first message, the target RAN side selects a suitable network node (i.e., the target network node). This target network node is one network node among the at least one network node pre-configured in the terminal carried in the first message, or one network node among the at least one network node pre-configured in the target RAN side.

The terminal (hereinafter referred to as UE) may connect directly to the computing-resource orchestration center to acquire or receive computing-resource information of the RAN sent by the computing-resource orchestration center. Alternatively, the UE may first access a default RAN side, then connect to the computing-resource orchestration center through the default RAN side, and acquire or receive computing-resource information of other RANs from the computing-resource orchestration center. The following uses the UE connecting directly to the computing-resource orchestration center as an example.

Exemplary, Embodiment 1: the terminal acquires only the computing-resource information of the RAN side from the computing-resource orchestration center; where the number of the RAN side here is at least one.

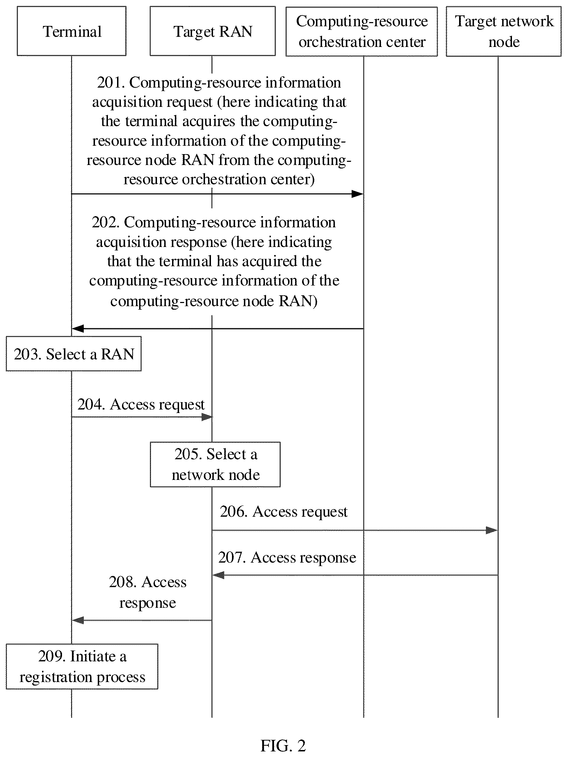

Referring to FIG. 2, FIG. 2 is a schematic signaling flowchart of a computing resources-based distributed network selection method according to an embodiment of the present disclosure. FIG. 2 shows a signaling interaction diagram for network selection implemented by the terminal acquiring only the computing-resource information of the RAN side from the computing-resource orchestration center in the computing resources-based distributed network selection method. The computing resources-based distributed network selection method provided by this embodiment includes the following steps.

Step 200, the RAN side has completed registration with the computing-resource orchestration center.

Step 201, the UE sends a computing-resource information acquisition request to the computing-resource orchestration center, for the UE to acquire computing-resource information of computing-resource node RAN (here, the computing-resource node is the RAN side) from the computing-resource orchestration center, primarily carrying information such as computing-resource size, computing-resource service (provided for the terminal), a computing-resource node RAN identifier, a location (here referring to the location of the computing-resource node RAN), and network performance parameters.

Step 202, after receiving the computing-resource information of the computing-resource nodes (including the computing-resource information of the RAN side), the UE responds to it (here referring to a computing-resource information acquisition response, e.g., indicating that the computing-resource information has been acquired).

Step 203, the UE selects a suitable RAN side (i.e., the target RAN side or a target RAN) according to the received computing-resource information of the computing-resource nodes.

Step 204, the UE sends an access request to the target RAN (here referring to the first message indicating that the terminal requests to access the target RAN side; and this message may carry locally configured (here referring to pre-configured in the terminal) network node information (here referring to computing-resource information of at least one network node)).

Step 205, after receiving the access request from the UE, the target RAN side selects a suitable network node (i.e., the target network node), where the network node selection may be performed according to network node information carried in Step 204 (here referring to the network node information pre-configured in the terminal) or network node information configured locally in the RAN. If only one network node is included, that network node is the target network node; and if multiple network nodes are included, the target network node is selected according to the computing-resource information of the target RAN side based on the multiple network nodes.

Step 206, the target RAN side sends the selected network node (i.e., the target network node) an access request (here referring to the second message indicating that the target RAN side requests to access the target network node).

Step 207, after receiving the access request from the target RAN side, the target network node sends the target RAN side an access response (here referring to the third message indicating that the target RAN side is allowed to access the target network node), for agreeing to its access.

Step 208, the target RAN side sends the UE an access response (here referring to the fourth message indicating that the terminal is allowed to access the target network node through the target RAN side), for agreeing to its access.

Step 209, the UE initiates a registration process. This refers to the UE, the target RAN side, and the target network node performing a network registration operation.

Exemplary, Embodiment 2: the computing-resource orchestration center sends the computing-resource information of the RAN side to the terminal.

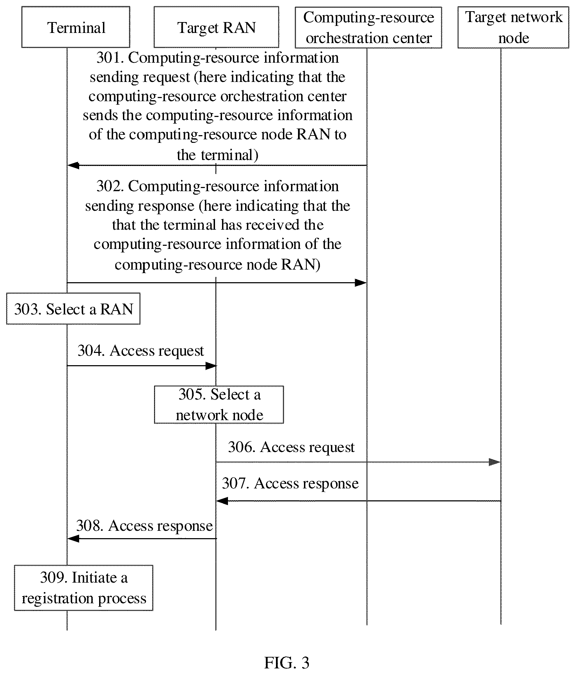

Referring to FIG. 3, FIG. 3 is a schematic signaling flowchart of a computing resources-based distributed network selection method according to another embodiment of the present disclosure. FIG. 3 shows a signaling interaction diagram for network selection implemented by the terminal receiving the computing-resource information of the RAN side from the computing-resource orchestration center in the computing resources-based distributed network selection method. The computing resources-based distributed network selection method provided by this embodiment includes the following steps.

Step 300, the RAN side has completed registration with the computing-resource orchestration center.

Step 301, the computing-resource orchestration center sends a computing-resource information sending request to the UE. This refers to the computing-resource orchestration center sending computing-resource information of computing-resource node RAN (here referring to the computing-resource node being the RAN side) to the terminal, primarily carrying information such as computing-resource size, computing-resource service (provided for the terminal), computing-resource node RAN identifier, location (here referring to the location of the computing-resource node RAN), and network performance parameters.

Step 302, after receiving the computing-resource information of the computing-resource nodes, the UE responds to the computing-resource orchestration center (here referring to a computing-resource information sending response, e.g., indicating that the computing-resource information has been received).

Step 303, the UE selects a suitable RAN side (i.e., the target RAN side) according to the received computing-resource information of the computing-resource nodes (including the computing-resource information of the RAN side).

Step 304, the UE sends an access request to the target RAN (here referring to the first message indicating that the terminal requests to access the target RAN side; and this message may carry locally configured (here referring to pre-configured in the terminal) network node information (here referring to computing-resource information of at least one network node)).

Step 305, after receiving the access request from the UE, the target RAN side selects a suitable network node (i.e., the target network node), where the network node selection may be performed according to network node information carried in Step 204 (here referring to the network node information pre-configured in the terminal) or network node information configured locally in the RAN). If only one network node is included, that network node is the target network node; and if multiple network nodes are included, the target network node is selected according to the computing-resource information of the target RAN side based on the multiple network nodes.

Step 306, the target RAN side sends the selected network node (i.e., the target network node) an access request (here referring to the second message indicating that the target RAN side requests to access the target network node).

Step 307, after receiving the access request from the target RAN side, the target network node sends the target RAN side an access response (here referring to the third message indicating that the target RAN side is allowed to access the target network node), for agreeing to its access.

Step 308, the target RAN side sends the UE an access response (here referring to the fourth message indicating that the terminal is allowed to access the target network node through the target RAN side), for agreeing to its access.

Step 309, the UE initiates a registration process. This refers to the UE, the target RAN side, and the target network node performing a network registration operation.

The difference between Embodiment 2 and Embodiment 1 is that the computing-resource orchestration center sends the computing-resource information of the computing-resource node RAN to the terminal, rather than the terminal actively acquiring the computing-resource information of the computing-resource node RAN.

Scenario 2: if the computing-resource information acquired by the terminal from the computing-resource orchestration center is the computing-resource information of the RAN side and the network nodes, or the computing-resource information of the computing-resource nodes sent by the computing-resource orchestration center to the terminal is the computing-resource information of the RAN side and the network nodes, the terminal selects a suitable RAN side (i.e., the target RAN side) according to the computing-resource information of the RAN side, and sends a first message indicating that the terminal requests to access the target RAN side to the target RAN side. After receiving the first message, the target RAN side selects a suitable network node (i.e., the target network node) according to the computing-resource information of each network node in the first message.

The UE may connect directly to the computing-resource orchestration center to acquire or receive computing-resource information of the RAN side and the network nodes from the computing-resource orchestration center. Alternatively, the UE may first access a default RAN side, then connect to the computing-resource orchestration center through the default RAN side, and acquire or receive computing-resource information of other RAN side and network nodes from the computing-resource orchestration center. The following uses the UE connecting directly to the computing-resource orchestration center as an example.

Exemplary, Embodiment 3: the terminal acquires computing-resource information of the RAN side and the network nodes from the computing-resource orchestration center; and the number of the RAN side and the number of the network nodes here are each at least one.

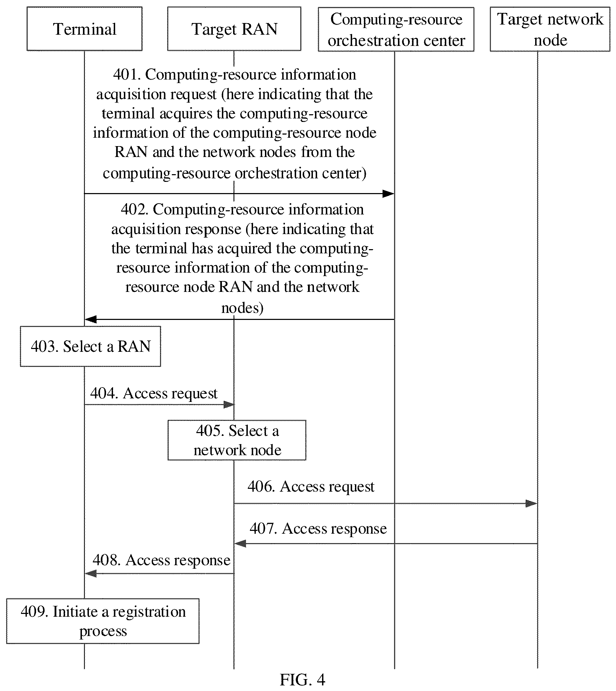

Referring to FIG. 4, FIG. 4 is a schematic signaling flowchart of a computing resources-based distributed network selection method according to yet another embodiment of the present disclosure. FIG. 4 shows a signaling interaction diagram for network selection implemented by the terminal acquiring the computing-resource information of the RAN side and the network nodes from the computing-resource orchestration center in the computing resources-based distributed network selection method. The computing resources-based distributed network selection method provided by this embodiment includes the following steps.

Step 400, the RAN side and the network nodes have completed registration with the computing-resource orchestration center.

Step 401, the UE sends a computing-resource information acquisition request to the computing-resource orchestration center. This refers to the UE acquiring computing-resource information of computing-resource node RAN (here referring to the computing-resource node being the RAN side) and network nodes from the computing-resource orchestration center, primarily carrying information such as computing-resource size, computing-resource service (provided for the terminal), computing-resource node RAN and network node identifiers (here referring to RAN side identifier and network node identifier), location (here referring to location of the computing-resource node RAN and location of the network node), and network performance parameters.

Step 402, after receiving the computing-resource information of the computing-resource nodes (including the computing-resource information of the RAN side and the network nodes), the UE responds to the computing-resource nodes (here referring to a computing-resource information acquisition response, e.g., indicating that the computing-resource information has been acquired).

Step 403, the UE selects a suitable RAN side (i.e., the target RAN side) according to the received computing-resource information of the computing-resource nodes.

Step 404, the UE sends an access request to the target RAN side, simultaneously sending the received computing-resource information of the network nodes to the target RAN side. That is, the UE sends the first message indicating that the terminal requests to access the target RAN side to the target RAN side, and the first message carries the received computing-resource information of the network nodes.

Step 405, after receiving the access request from the UE, the target RAN side selects a suitable network node (i.e., the target network node) according to the received computing-resource information of the network nodes. If only one network node is included, that network node is the target network node; and if multiple network nodes are included, the target network node is selected according to the computing-resource information of the target RAN side based on the multiple network nodes.

Step 406, the target RAN side sends the selected network node (i.e., the target network node) an access request (here referring to the second message indicating that the target RAN side requests to access the target network node).

Step 407, after receiving the access request from the target RAN side, the target network node sends the target RAN side an access response (here referring to the third message indicating that the target RAN side is allowed to access the target network node), for agreeing to its access.

Step 408, the target RAN side sends the UE an access response (here referring to the fourth message indicating that the terminal is allowed to access the target network node through the target RAN side), for agreeing to its access.

Step 409, the UE initiates a registration process. This refers to the UE, the target RAN side, and the target network node performing a network registration operation.

Exemplary, Embodiment 4: the computing-resource orchestration center sends the computing-resource information of the RAN side and the network nodes to the terminal.

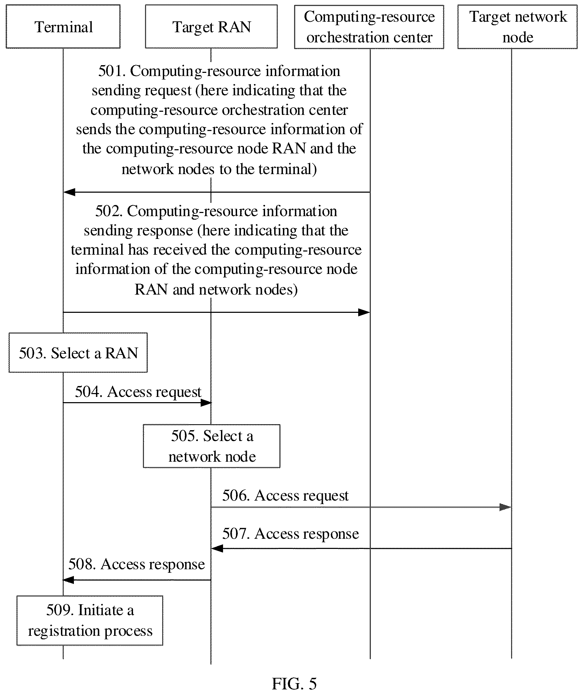

Referring to FIG. 5, FIG. 5 is a schematic signaling flowchart of a computing resources-based distributed network selection method according to still another embodiment of the present disclosure. FIG. 5 shows a signaling interaction diagram for network selection implemented by the terminal receiving the computing-resource information of the RAN side and the network nodes from the computing-resource orchestration center in the computing resources-based distributed network selection method. The computing resources-based distributed network selection method provided by this embodiment includes the following steps.

Step 500, the RAN side and the network nodes have completed registration with the computing-resource orchestration center.

Step 501, the computing-resource orchestration center sends a computing-resource information sending request to the UE. This refers to the computing-resource orchestration center sending computing-resource information of computing-resource node RAN (here referring to the computing-resource node being the RAN side) and network nodes to the UE, primarily carrying information such as computing-resource size, computing-resource service (provided for the terminal), computing-resource node RAN and network node identifiers (here referring to RAN side identifier and network node identifier), location (here referring to location of the computing-resource node RAN and location of the network node), and network performance parameters.

Step 502, after receiving the computing-resource information of the computing-resource nodes, the UE responds to the computing-resource orchestration center (here referring to a computing-resource information sending response, e.g., indicating that the computing-resource information has been received).

Step 503, the UE selects a suitable RAN side (i.e., the target RAN side) according to the received computing-resource information of the computing-resource nodes.

Step 504, the UE sends an access request to the target RAN side, simultaneously sending the received computing-resource information of the network nodes to the target RAN side. That is, the UE sends the first message indicating that the terminal requests to access the target RAN side to the target RAN side, and the first message carries the received computing-resource information of the network nodes.

Step 505, after receiving the access request from the UE, the target RAN side selects a suitable network node (i.e., the target network node) according to the received computing-resource information of the network nodes. If only one network node is included, that network node is the target network node; and if multiple network nodes are included, the target network node is selected according to the computing-resource information of the target RAN side based on the multiple network nodes.

Step 506, the target RAN side sends to the selected network node (i.e., the target network node) an access request (here referring to the second message indicating that the target RAN side requests to access the target network node).

Step 507, after receiving the access request from the target RAN side, the target network node sends the target RAN side an access response (here referring to the third message indicating that the target RAN side is allowed to access the target network node), for agreeing to its access.

Step 508, the target RAN side sends the UE an access response (here referring to the fourth message indicating that the terminal is allowed to access the target network node through the target RAN side), for agreeing to its access.

Step 509, the UE initiates a registration process. This refers to the terminal, the target RAN side, and the target network node performing a network registration operation.

The difference between Embodiment 4 and Embodiment 3 is that the computing-resource orchestration center sends the computing-resource information of the computing-resource node RAN and the network nodes to the terminal, rather than the terminal actively acquiring the computing-resource information of the computing-resource node RAN and the network nodes.

Scenario 3: if the computing-resource information acquired by the terminal from the computing-resource orchestration center is the computing-resource information of the network nodes, or the computing-resource information of the computing-resource nodes sent by the computing-resource orchestration center to the terminal is the computing-resource information of the network nodes, the terminal sends a first message indicating a request to send computing-resource information to the accessed RAN side (i.e., the target RAN side). After receiving the first message, the target RAN side selects a suitable network node (i.e., the target network node) according to computing-resource information of each network node in the first message.

Exemplary, Embodiment 5: the terminal acquires computing-resource information of the network nodes from the computing-resource orchestration center; and the number of the network nodes here is at least one.

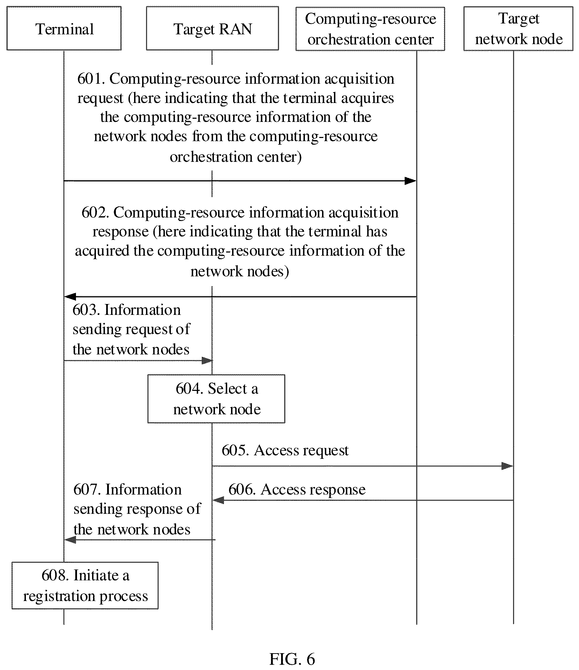

Referring to FIG. 6, FIG. 6 is a schematic signaling flowchart of a computing resources-based distributed network selection method according to a further embodiment of the present disclosure. FIG. 6 shows a signaling interaction diagram for network selection implemented by the terminal acquiring the computing-resource information of the network nodes from the computing-resource orchestration center in the computing resources-based distributed network selection method. The computing resources-based distributed network selection method provided by this embodiment includes the following steps.

Step 600, the computing-resource node network nodes (i.e., network nodes) have completed registration with the computing-resource orchestration center.

Step 601, the UE sends a computing-resource information acquisition request to the computing-resource orchestration center. This refers to the UE acquiring computing-resource information of network nodes from the computing-resource orchestration center, primarily carrying information such as computing-resource size, computing-resource service (provided for the terminal), network node identifiers, locations (here referring to the locations of the network nodes), and network performance parameters.

Step 602, after receiving the computing-resource information of the computing-resource nodes (including the computing-resource information of the network nodes), the UE responds to the computing-resource nodes (here referring to a computing-resource information acquisition response, e.g., indicating that the computing-resource information has been acquired).

Step 603, the UE sends a computing-resource information sending request of the network nodes to the accessed RAN side (here referring to the target RAN side). That is, the UE sends the first message indicating that the terminal requests to access the target RAN side to the accessed RAN side, and the first message carries the received computing-resource information of the network nodes.

Step 604, the target RAN side selects a suitable network node (i.e., the target network node) according to the received computing-resource information of the network nodes. If only one network node is included, that network node is the target network node; and if multiple network nodes are included, the target network node is selected according to the computing-resource information of the target RAN side based on the multiple network nodes.

Step 605, the target RAN side sends the selected network node (i.e., the target network node) an access request (here referring to the second message indicating that the target RAN side requests to access the target network node).

Step 606, after receiving the access request from the target RAN side, the target network node sends the target RAN side an access response (here referring to the third message indicating that the target RAN side is allowed to access the target network node), for agreeing to its access.

Step 607, the target RAN side sends a network node information sending response to the UE. Herein, this refers to the target RAN side sending the fourth message indicating that the terminal is allowed to access the target network node through the target RAN side to the UE.

Step 608, the UE initiates a registration process. This refers to the UE, the target RAN side, and the target network node performing a network registration operation.

Exemplary, Embodiment 6: the computing-resource orchestration center sends computing-resource information of the network nodes to the terminal; and the number of the network nodes here is at least one.

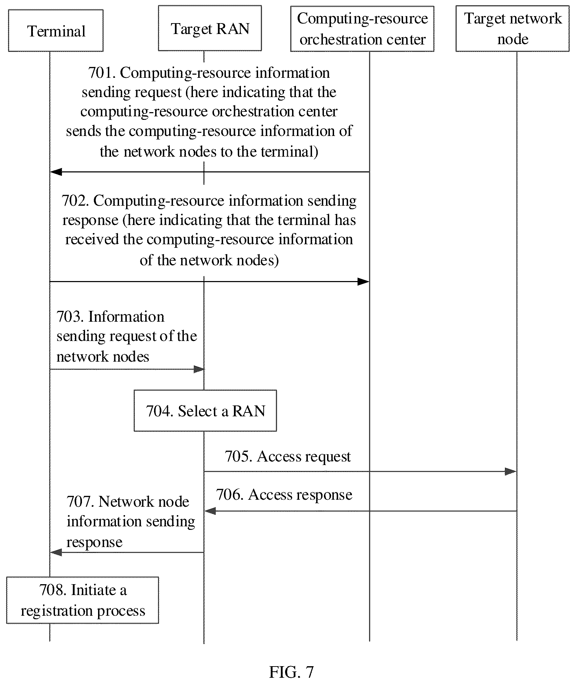

Referring to FIG. 7, FIG. 7 is a schematic signaling flowchart of a computing resources-based distributed network selection method according to yet a further embodiment of the present disclosure. FIG. 7 shows a signaling interaction diagram for network selection implemented by the terminal receiving the computing-resource information of the network nodes sent by the computing-resource orchestration center in the computing resources-based distributed network selection method. The computing resources-based distributed network selection method provided by this embodiment includes the following steps.

Step 700, the computing-resource node network nodes (i.e., network nodes) have completed registration with the computing-resource orchestration center.

Step 701, the computing-resource orchestration center sends a computing-resource information sending request to the UE. This refers to the computing-resource orchestration center sending computing-resource information of network nodes to the terminal, primarily carrying information such as computing-resource size, computing-resource service (provided for the terminal), network node identifiers, locations (here referring to the locations of the network nodes), and network performance parameters.

Step 702, after receiving the computing-resource information of the computing-resource nodes (including the computing-resource information of the network nodes), the UE responds to the computing-resource nodes (here referring to a computing-resource information acquisition response, e.g., indicating that the computing-resource information has been acquired).

Step 703, the UE sends a computing-resource information sending request of the network nodes to the accessed RAN side (here referring to the target RAN side). That is, the UE sends the first message indicating that the terminal requests to access the target RAN side to the accessed RAN side, and the first message carries the received computing-resource information of the network nodes.

Step 704, the target RAN side selects a suitable network node (i.e., the target network node) according to the received computing-resource information of the network nodes. If only one network node is included, that network node is the target network node; and if multiple network nodes are included, the target network node is selected according to the computing-resource information of the target RAN side based on the multiple network nodes.

Step 705, the target RAN side sends the selected network node (i.e., the target network node) an access request (here referring to the second message indicating that the target RAN side requests to access the target network node).

Step 706, after receiving the access request from the target RAN side, the target network node sends the target RAN side an access response (here referring to the third message indicating that the target RAN side is allowed to access the target network node), for agreeing to its access.

Step 707, the target RAN side sends a network node information sending response to the UE. Herein, this refers to the target RAN side sending the fourth message indicating that the terminal is allowed to access the target network node through the target RAN side to the UE.

Step 708, the UE initiates a registration process. This refers to the UE, the target RAN side, and the target network node performing a network registration operation.

The difference between Embodiment 6 and Embodiment 5 is that the computing-resource orchestration center sends the computing-resource information of the network nodes to the terminal, rather than the terminal actively acquiring the computing-resource information of the network nodes. Furthermore, Embodiment 6 and Embodiment 7 only consider the computing-resource information of the network nodes acquired or received by the terminal, and the terminal has already selected a suitable RAN for access.

Optionally, this method is applied to an extended reality (XR) service scenario; and the determining the target RAN side according to the computing-resource information of the computing-resource nodes further includes:
determining the target RAN side according to the computing-resource nodes, computing-resource requirement information of the XR service scenario, and the computing-resource information; where the target RAN side is configured to determine the target network node to be accessed according to the received computing-resource information of each network node in the first message or the pre-configured computing-resource information of at least one network node locally and the computing-resource requirement information.

In this embodiment, when the terminal acquires the computing-resource information of the RAN side and the network nodes from the computing-resource orchestration center, it may select a suitable RAN and network node according to computing-resource requirements of an accessed XR service, i.e., select the RAN and the network node that meet the requirements of the XR service.

Specifically, for some XR service scenarios, the UE may select the RAN and the network node according to the accessed XR service. For example, if the XR service accessed by the UE is an 8K video, the required computing resources of the RAN and the network node is larger; and when the accessed XR service is a 4K video, the required computing resources of the RAN and the network node is smaller. Therefore, when the UE acquires the computing resources of the RAN and the network nodes from the computing-resource orchestration center, it can select a suitable RAN and network node according to the computing-resource requirements of the accessed XR service, not necessarily the optimal RAN and network node. That is, it only needs to select the RAN and the network node that meet the requirements of the XR service. A specific implementation process of the network selection can be based on the above embodiments and will not be described here.

A computing resources-based distributed network selection method provided by the present disclosure may be specifically implemented as follows.
1. A terminal acquires computing-resource information of computing-resource nodes (RAN and/or network nodes) from a computing-resource orchestration center, or the computing-resource orchestration center sends computing-resource information of RAN and/or network nodes to the terminal. 2. Based on step 1, when the terminal only acquires computing-resource information of computing-resource node RAN, it selects a suitable RAN according to this computing-resource information and then sends an access request; where this step may carry information of computing-resource node network nodes configured in the terminal itself. 3. Based on step 2, the RAN selects a suitable network node according to the information of the computing-resource node network nodes (configured locally in the UE or locally in the RAN) and then sends an access request. 4. Based on steps 2 and 3, the network node sends an access response to the RAN, and the RAN sends an access response to the terminal.
5. Based on step 1, when the terminal simultaneously acquires computing-resource information of computing-resource node RAN and network nodes, it selects a suitable RAN according to the computing-resource information and then sends an access request; simultaneously, this step carries the information of the computing-resource node network nodes. 6. Based on step 5, the RAN selects a suitable network node according to the received information of the computing-resource node network nodes and then sends an access request. 7. Based on steps 5 and 6, the network node sends an access response to the RAN, and the RAN sends an access response to the terminal.
8. Based on step 1, when the terminal only acquires computing-resource information of computing-resource node network nodes, it sends the computing-resource information to an already accessed RAN (provided that the terminal has already established a connection with the RAN). 9. Based on step 8, the RAN selects a suitable network node according to the received information of the computing-resource node network nodes and then sends an access request. 10. Based on steps 8 and 9, the network node sends an access response to the RAN, and the RAN sends a sending response for the information of the computing-resource node network node to the terminal. 11. Based on step 4, 7, or 10, a registration process is initiated.

Therefore, the computing resources-based distributed network selection method provided by the present disclosure solves the problem of the terminal selecting a suitable RAN and network node under the circumstances of deep integration of computing-network and coexistence of multiple network nodes.

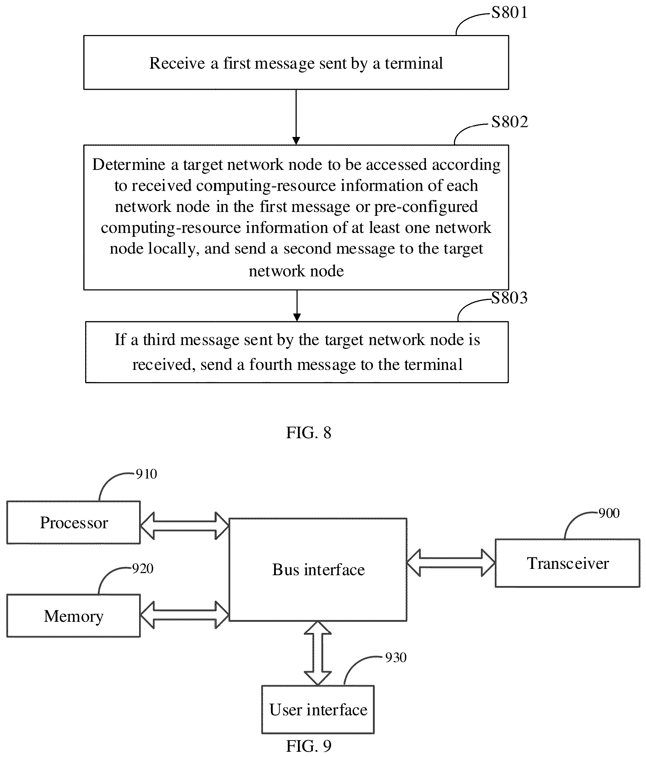

FIG. 8 is a schematic flowchart of a computing resources-based distributed network selection method according to another embodiment of the present disclosure. As shown in FIG. 8, an execution subject of the computing resources-based distributed network selection method provided in this embodiment is a RAN side, here referring to a target RAN side selected or pre-accessed by the terminal. The computing resources-based distributed network selection method provided by the embodiment of the present disclosure includes the following steps:
step 801, receive a first message sent by the terminal, where the first message is used for indicating that the terminal requests to access the target RAN side or that the terminal requests to send computing-resource information of each computing-resource node; the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
step 802, determine a target network node to be accessed according to received computing-resource information of each network node in the first message or pre-configured computing-resource information of at least one network node locally, and send a second message to the target network node; where the second message is used for indicating that the target RAN side requests to access the target network node;
step 803, if a third message sent by the target network node is received, send a fourth message to the terminal; where the third message is used for indicating agreeing that the target RAN side accesses the target network node, and the fourth message is used for indicating agreeing that the terminal accesses the target network node through the target RAN side;
where the terminal is configured to, when receiving the fourth message, perform a network registration operation.

In this embodiment, combined with FIG. 2 to FIG. 7, the target RAN side receives the first message sent by the terminal, and according to computing-resource size, etc., in the computing-resource information of computing-resource nodes carried in the first message or according to computing-resource size, etc., in pre-configured computing-resource information of at least one network node locally, the target RAN side selects a target network node from the network nodes carried in the first message or from the at least one network node pre-configured locally and sends a second message (i.e., an access request) to the target network node. If the target network node agrees with access, it sends a third message (i.e., an access response indicating that the target RAN side is allowed to access the target network node) to the target network node. After the target RAN side receives the access response, it sends a fourth message (i.e., an access response indicating that the terminal is allowed to access the target network node through the target RAN side) to the terminal. After receiving the access response, the terminal initiates a registration process. It achieves a selection of network nodes based on a computing-resource situation of the RAN side and/or the network nodes, thereby effectively providing a service for the terminal.

Optionally, if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message includes computing-resource information of each network node in the computing-resource nodes acquired or received by the terminal.

Optionally, the determining the target network node to be accessed according to the received computing-resource information of each network node in the first message or the pre-configured computing-resource information of at least one network node locally may include the following steps (combined with FIG. 2 to FIG. 7):
if the first message includes computing-resource information of at least one network node, determining the target network node to be accessed according to the computing-resource information of the at least one network node in the first message, where the computing-resource information of the at least one network node in the first message is acquired or received by the terminal, or pre-configured in the terminal;
if the first message does not include computing-resource information of a network node, determining the target network node to be accessed according to the pre-configured computing-resource information of at least one network node locally.

Where if the acquired or received computing-resource nodes include a RAN side and do not include a network node, and when the first message includes pre-configured computing-resource information of at least one network node in the terminal, determining a target network node to be accessed according to the pre-configured computing-resource information of the at least one network node in the terminal; and when the first message does not include computing-resource information of a network node, determining a target network node to be accessed according to the pre-configured computing-resource information of the at least one network node locally;
if the acquired or received computing-resource nodes at least include a network node, determining a target network node to be accessed according to received computing-resource information of each network node included in the first message.

Optionally, the network node includes a distributed network node and a centralized network node.

Optionally, the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, this method is applied to an extended reality (XR) service scenario. If the target RAN side is determined by the terminal according to the computing-resource nodes, computing-resource requirement information of the XR service scenario, and the computing-resource information, the determining the target network node to be accessed according to the received computing-resource information of each network node in the first message or the pre-configured computing-resource information of at least one network node locally further includes:
determining the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

It should be noted here that a specific implementation process of the computing resources-based distributed network selection method with the target RAN side as the execution subject can refer to the embodiments shown in FIG. 2 to FIG. 7, and the specific implementation process will not be repeated here.

An embodiment of the present disclosure provides a computing resources-based distributed network selection method, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal. The computing-resource information includes computing-resource size, computing-resource service provided for the terminal, and a computing-resource node identifier. The method includes:
receiving a third message sent by the target RAN side, where the third message is used for indicating agreeing that the target RAN side accesses the target network node;
sending a fourth message to the target RAN side, where the fourth message is used for indicating agreeing that the terminal accesses the target network node through the target RAN side.

It should be noted here that a specific implementation process of the computing resources-based distributed network selection method with the network node as the execution subject can refer to the embodiments shown in FIG. 2 to FIG. 7, and the specific implementation process will not be repeated here.

FIG. 9 is a schematic structural diagram of a computing resources-based distributed network selection apparatus according to an embodiment of the present disclosure. As shown in FIG. 9, the computing resources-based distributed network selection apparatus provided by this embodiment is applied to a terminal. The computing resources-based distributed network selection apparatus provided by this embodiment includes: a transceiver 900, configured to receive and send data under control of a processor 910.

In FIG. 9, a bus architecture may include any number of interconnected buses and bridges. Specifically, various circuits of one or more processors represented by the processor 910 and a memory represented by a memory 920 are linked together. A bus architecture may also link together various other circuits, such as a peripheral device, a voltage regulator and a power management circuit, which are well known in the art and are therefore not described further herein. A bus interface provides an interface. The transceiver 900 may be a plurality of elements, that is, including a transmitter and a receiver, and providing units for communicating with various other apparatuses in transmission media. These transmission media include transmission media such as a wireless channel, a wired channel, an optical cable and the like. For different user equipment, a user interface 930 may also be an interface capable of externally/internally connecting desired devices, where the connected devices include but not limited to a keypad, a display, a speaker, a microphone, a joystick and the like.

The processor 910 is responsible for managing the bus architecture and general processing, and the memory 920 can store data used by the processor 910 when performing operations.

Optionally, the processor 910 can be a central processor unit (CPU), an application-specific integrated circuit (Application Specific Integrated Circuit, ASIC), a field-programmable gate array (Field-Programmable Gate Array, FPGA) or a complex programmable logic device (Comple6 Programmable Logic Device, CPLD), and the processor can also adopt a multi-core architecture.

The processor is configured to execute any of the methods provided by the embodiments of the present disclosure according to obtained executable instructions by calling a computer program stored in the memory. The processor and the memory may also be physically separated.

In this embodiment, the memory 920 is configured to store a computer program; the transceiver 900 is configured to transmit and receive data under control of the processor 910; and the processor 910 is configured to read the computer program in the memory and perform the following operations:
acquiring computing-resource information of computing-resource nodes from a computing-resource orchestration center or receiving computing-resource information of computing-resource nodes sent by the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier;
determining a target RAN side according to the computing-resource information of the computing-resource nodes, and sending a first message to the target RAN side, where the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node;
if a fourth message sent by the target RAN side is received, performing a network registration operation; where the fourth message is used for indicating agreeing that the terminal accesses the target network node through the target RAN side and the fourth message is determined to be sent when the target RAN side receives a third message sent by the target network node, where the third message is used for indicating agreeing that the target RAN side accesses the target network node.

Optionally, the processor 910, when configured to determine the target RAN side according to the computing-resource information of the computing-resource nodes, specifically includes:
if the acquired or received computing-resource nodes at least include a RAN side, determining a target RAN side to be accessed according to computing-resource information of each RAN side; where the first message is used for indicating that the terminal requests to access the target RAN side;
if the acquired or received computing-resource nodes include a network node and do not include a RAN side, the target RAN side is a RAN side pre-accessed by the terminal; where the first message is used for indicating that the terminal requests to send computing-resource information, and the first message includes computing-resource information of each network node in the acquired or received computing-resource nodes.

Optionally, if the acquired or received computing-resource nodes include a RAN side and do not include a network node, and when the first message includes pre-configured computing-resource information of at least one network node in the terminal, the target RAN side is configured to determine a target network node to be accessed according to the pre-configured computing-resource information of the at least one network node in the terminal; and when the first message does not include computing-resource information of a network node, the target RAN side is configured to determine a target network node to be accessed according to the pre-configured computing-resource information of the at least one network node locally;
if the acquired or received computing-resource nodes at least include a network node, the target RAN side is configured to determine a target network node to be accessed according to received computing-resource information of each network node included in the first message.

Optionally, the network node includes a distributed network node and a centralized network node.

Optionally, the processor 910, before acquiring the computing-resource information of the computing-resource nodes from the computing-resource orchestration center or receiving the computing-resource information of the computing-resource nodes sent by the computing-resource orchestration center, specifically includes:
sending a fifth message to the computing-resource orchestration center, where the fifth message is used for indicating a request to subscribe to computing-resource size updated in real time by each computing-resource node; where the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, this apparatus is applied to an extended reality (XR) service scenario; and the processor 910, when configured to determine the target RAN side according to the computing-resource information of the computing-resource nodes, further specifically includes:
determining the target RAN side according to the computing-resource nodes, computing-resource requirement information of the XR service scenario, and the computing-resource information; where the target RAN side is configured to determine the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.
It should be noted here that the computing resources-based distributed network selection apparatus provided by the present disclosure can implement all the method steps implemented by the above method embodiments shown in FIG. 1 to FIG. 7, and can achieve the same technical effects, therefore, the parts of this embodiment which are same as those of the method embodiments and the beneficial effects thereof will not be specifically detailed here.

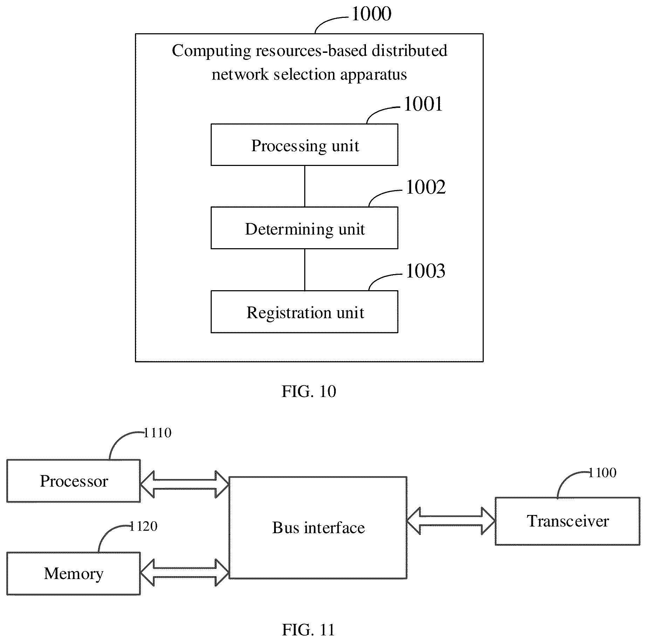

FIG. 10 is a schematic structural diagram of a computing resources-based distributed network selection apparatus according to another embodiment of the present disclosure. As shown in FIG. 10, the computing resources-based distributed network selection apparatus provided by this embodiment is applied to a terminal. The power-based distributed network selection apparatus 1000 provided by this embodiment includes:
a processing unit 1001, configured to acquire computing-resource information of computing-resource nodes from a computing-resource orchestration center or receiving computing-resource information of computing-resource nodes sent by the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, and the computing-resource information includes computing-resource size, computing-resource service provided for the terminal, and a computing-resource node identifier;
a determining unit 1002, configured to determine a target RAN side according to the computing-resource information of the computing-resource nodes, and send a first message to the target RAN side, where the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, where the second message is used for indicating that the target RAN side requests to access the target network node;
a registration unit 1003, configured to, when a fourth message sent by the target RAN side is received, perform a network registration operation; where the fourth message is used for indicating agreeing that the terminal accesses the target network node through the target RAN side and the fourth message is determined to be sent when the target RAN side receives a third message sent by the target network node, where the third message is used for indicating agreeing that the target RAN side accesses the target network node.

Optionally, the determining unit is specifically configured to:
when the acquired or received computing-resource nodes at least include a RAN side, determine a target RAN side to be accessed according to computing-resource information of each RAN side; where the first message is used for indicating that the terminal requests to access the target RAN side;
when the acquired or received computing-resource nodes include a network node and do not include a RAN side, the target RAN side is a RAN side pre-accessed by the terminal; where the first message is used for indicating that the terminal requests to send computing-resource information, and the first message includes computing-resource information of each network node in the acquired or received computing-resource nodes.

Optionally, if the acquired or received computing-resource nodes include a RAN side and do not include a network node, and when the first message includes pre-configured computing-resource information of at least one network node in the terminal, the target RAN side is configured to determine a target network node to be accessed according to the pre-configured computing-resource information of the at least one network node in the terminal; and when the first message does not include computing-resource information of a network node, the target RAN side is configured to determine a target network node to be accessed according to the pre-configured computing-resource information of the at least one network node locally;
if the acquired or received computing-resource nodes at least include a network node, the target RAN side is configured to determine a target network node to be accessed according to received computing-resource information of each network node in the first message.

Optionally, the network node includes a distributed network node and a centralized network node.

Optionally, the processing unit is further configured to:
before acquiring the computing-resource information of the computing-resource nodes from the computing-resource orchestration center or receiving the computing-resource information of the computing-resource nodes sent by the computing-resource orchestration center, send a fifth message to the computing-resource orchestration center, where the fifth message is used for indicating a request to subscribe to computing-resource size updated in real time by each computing-resource node; where the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, the apparatus is applied to an extended reality (XR) service scenario; and the determining unit is further specifically configured to:
determine the target RAN side according to the computing-resource nodes, computing-resource requirement information of the XR service scenario, and the computing-resource information; where the target RAN side is configured to determine the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

It should be noted here that the computing resources-based distributed network selection apparatus provided by the present disclosure can implement all the method steps implemented by the above method embodiments shown in FIG. 1 to FIG. 7, and can achieve the same technical effects, therefore, the parts of this embodiment which are same as those of the method embodiments and the beneficial effects thereof will not be specifically detailed here.

FIG. 11 is a schematic structural diagram of a computing resources-based distributed network selection apparatus according to still another embodiment of the present disclosure. As shown in FIG. 11, the computing resources-based distributed network selection apparatus provided by this embodiment is applied to a target RAN side, where the target RAN side is a RAN side determined to be accessed by a terminal or a RAN side pre-accessed by a terminal. The power-based distributed network selection apparatus provided by this embodiment includes: a transceiver 1100, configured to receive and transmit data under the control of a processor 1110.

In FIG. 11, a bus architecture may include any number of interconnected buses and bridges. Specifically, various circuits of one or more processors represented by the processor 1110 and the memory represented by a memory 1120 are linked together. A bus architecture may also link together various other circuits, such as a peripheral device, a voltage regulator and a power management circuit, which are well known in the art and are therefore not described further herein. A bus interface provides an interface. The transceiver 1100 may be a plurality of elements, that is, including a transmitter and a receiver, and providing units for communicating with various other apparatuses in transmission media. These transmission media include transmission media such as a wireless channel, a wired channel, an optical cable and the like. The processor 1110 is responsible for managing the bus architecture and general processing, and the memory 1120 can store data used by the processor 1110 when performing operations.

The processor 1110 can be a central processor unit (CPU), an application-specific integrated circuit (Application Specific Integrated Circuit, ASIC), a field-programmable gate array (Field-Programmable Gate Array, FPGA) or a complex programmable logic device (Complex Programmable Logic Device, CPLD), and the processor can also adopt a multi-core architecture.

In this embodiment, the memory 1120 is configured to store a computer program; the transceiver 1100 is configured to transmit and receive data under control of the processor; and the processor 1110 is configured to read the computer program in the memory and perform the following operations:
receiving a first message sent by the terminal, where the first message is used for indicating that the terminal requests to access the target RAN side or that the terminal requests to send computing-resource information of each network node; the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
determining a target network node to be accessed according to received computing-resource information of each network node in the first message or pre-configured computing-resource information of at least one network node locally, and sending a second message to the target network node, where the second message is used for indicating that the target RAN side requests to access the target network node;
if a third message sent by the target network node is received, sending a fourth message to the terminal; where the third message is used for indicating agreeing that the target RAN side accesses the target network node, and the fourth message is used for indicating agreeing that the terminal accesses the target network node through the target RAN side;
where the terminal is configured to, when receiving the fourth message, perform a network registration operation.
Optionally, if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message includes computing-resource information of each network node in the computing-resource nodes acquired or received by the terminal.

Optionally, the processor 1110, when configured to determine the target network node to be accessed according to the received computing-resource information of each network node in the first message or the pre-configured computing-resource information of at least one network node locally, specifically includes:
if the first message includes computing-resource information of at least one network node, determining the target network node to be accessed according to the computing-resource information of the at least one network node in the first message, where the computing-resource information of the at least one network node in the first message is acquired or received by the terminal, or pre-configured in the terminal;
if the first message does not include computing-resource information of a network node, determining the target network node to be accessed according to the pre-configured computing-resource information of at least one network node locally.

Optionally, the network node includes a distributed network node and a centralized network node.

Optionally, the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, this apparatus is applied to an extended reality (XR) service scenario; and if the target RAN side is determined by the terminal according to the computing-resource nodes, computing-resource requirement information of the XR service scenario, and the computing-resource information, the processor 1110, when used configured to determine the target network node to be accessed according to the received computing-resource information of each network node in the first message or the pre-configured computing-resource information of at least one network node locally, further includes:
determining the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

It should be noted here that the computing resources-based distributed network selection apparatus provided by the present disclosure can implement all the method steps implemented by the above method embodiments shown in FIG. 2 to FIG. 8, and can achieve the same technical effects, therefore, the parts of this embodiment which are same as the method embodiments and the beneficial effects thereof will not be specifically detailed here.

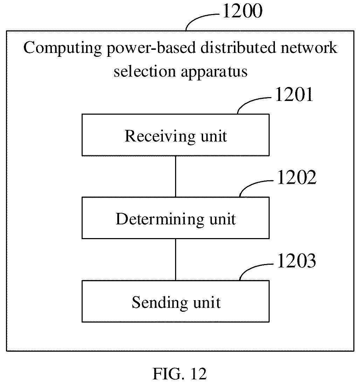

FIG. 12 is a schematic structural diagram of a computing resources-based distributed network selection apparatus according to yet another embodiment of the present disclosure. As shown in FIG. 12, the computing resources-based distributed network selection apparatus provided by this embodiment of the present disclosure is applied to a target RAN side, where the target RAN side is a RAN side determined to be accessed by a terminal or a RAN side pre-accessed by a terminal. The power-based distributed network selection apparatus 1200 provided by this embodiment includes:
a receiving unit 1201, configured to receive a first message sent by the terminal, where the first message is used for indicating that the terminal requests to access the target RAN side or that the terminal requests to send computing-resource information of each network node; and the computing-resource information of the computing-resource nodes is acquired by the terminal from a computing-resource orchestration center or received from the computing-resource orchestration center; where the computing-resource orchestration center is configured to manage computing-resource information at least including computing-resource nodes and provide the computing-resource information to the terminal, the computing-resource nodes include each wireless access network (RAN) side and/or each network node, the network node serves as a core network side, the computing-resource information includes computing-resource size, computing-resource service provided for the terminal, and a computing-resource node identifier;
a determining unit 1202, configured to determine a target network node to be accessed according to received computing-resource information of each network node in the first message or pre-configured computing-resource information of at least one network node locally, and sending a second message to the target network node; where the second message is used for indicating that the target RAN side requests to access the target network node;
a sending unit 1203, configured to, when a third message sent by the target network node is received, send a fourth message to the terminal, where the third message is used for indicating agreeing that the target RAN side accesses the target network node, and the fourth message is used for indicating agreeing that the terminal accesses the target network node through the target RAN side;
where the terminal is configured to, when receiving the fourth message, perform a network registration operation.

Optionally, if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message includes computing-resource information of each network node in the computing-resource nodes acquired or received by the terminal.

Optionally, the determining unit is specifically configured to:
when the first message includes computing-resource information of at least one network node, determine the target network node to be accessed according to the computing-resource information of the at least one network node in the first message, where the computing-resource information of the at least one network node in the first message is acquired or received by the terminal, or pre-configured in the terminal;
when the first message does not include computing-resource information of a network node, determine the target network node to be accessed according to the pre-configured computing-resource information of at least one network node locally.

Optionally, the network node includes a distributed network node and a centralized network node.

Optionally, the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

Optionally, the apparatus is applied to an extended reality (XR) service scenario; and the determining unit is further specifically configured to:
when the target RAN side is determined by the terminal according to the computing-resource nodes, computing-resource requirement information of the XR service scenario, and the computing-resource information, determine the target network node to be accessed according to the received computing-resource information of each network node in the first message or the pre-configured computing-resource information of at least one network node locally and the computing-resource requirement information.

Optionally, the computing-resource information further includes: locations of the computing-resource nodes and/or network performance parameters.

It should be noted here that the computing resources-based distributed network selection apparatus provided by the present disclosure can implement all the method steps implemented by the above method embodiments shown in FIG. 2 to FIG. 8, and can achieve the same technical effects, therefore, the parts of this embodiment which are same as the method embodiments and the beneficial effects thereof will not be specifically detailed here.

The present disclosure provides a computing resources-based distributed network selection apparatus, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal. The computing-resource information includes computing-resource size, computing-resource service provided for the terminal, and a computing-resource node identifier. The apparatus includes: a memory, a transceiver and a processor.

The memory is configured to store a computer program; the transceiver is configured to transmit and receive data under control of the processor; and the processor is configured to read the computer program in the memory and perform the following operations:
receiving a third message sent by the target RAN side, where the third message is used for indicating agreeing that the target RAN side accesses the target network node;
sending a fourth message to the target RAN side, where the fourth message is used for indicating agreeing that the terminal accesses the target network node through the target RAN side.

The present disclosure provides a computing resources-based distributed network selection apparatus, applied to a target network node, where the target network node is determined by a target RAN side according to received computing-resource information of at least one network node or pre-configured computing-resource information of at least one network node in the target RAN side. The target RAN side is a RAN side determined to be accessed by a terminal or a RAN side pre-accessed by the terminal. The computing-resource information includes a computing-resource size, computing-resource service provided for the terminal, and a computing-resource node identifier. The apparatus includes:
a receiving unit, configured to receive a third message sent by the target RAN side, where the third message is used for indicating agreeing that the target RAN side accesses the target network node;
a sending unit, configured to send a fourth message to the target RAN side, where the fourth message is used for indicating agreeing that the terminal accesses the target network node through the target RAN side.

It should be noted that the division of units in the embodiments of the present disclosure is schematic and is only a logical function division, and there may be other division manners in actual implementations. In addition, the functional units in the embodiments of the present disclosure may be integrated into one processing unit, or each unit may physically exist alone, or two or more units may be integrated into one unit. The above-integrated units can be realized either in the form of hardware or in the form of software functional units.

The integrated units may be stored in a processor-readable storage medium if being implemented in the form of software functional units and sold or used as an independent product. Based on this understanding, the essence of the technical solution of the present disclosure, or the part that contributes to the prior art, or all or a part of this technical solution may be embodied in a form of a software product. The computer software product is stored in a storage medium and includes several instructions to cause a computer device (which may be a personal computer, a server, or a network device, etc.) or a processor (processor) to perform all or part of the steps of the methods described in various embodiments of the present disclosure. The above storage medium includes various media that can store a program code, such as: a USB flash drive, a removable hard disk, a read-only memory (Read-Only Memory, ROM), a random access memory (Random Access Memory, RAM), a magnetic disk or an optical disk.

An embodiment of the present disclosure also provides a non-transitory readable storage medium. The non-transitory readable storage medium stores a computer program, and the computer program is configured to cause a processor to perform any of the above method embodiments.

The non-transitory readable storage medium may be any available medium or data storage device that the processor is able to access, including, but not limited to, a magnetic memory (e.g., a floppy disk, a hard disk, a magnetic tape, a magneto-optical disk (MO), etc.), an optical memory (e.g., a CD, a DVD, a BD, a HVD, etc.), and a semiconductor memory (e.g., a ROM, an EPROM, an EEPROM, a non-volatile memory (NAND FLASH), a solid-state drive (SSD)), etc.

It should be understood by those skilled in the art that the embodiments of the present disclosure may be provided as a method, a system, or a computer program product. Therefore, the present disclosure can take the form of an entire hardware embodiment, an entire software embodiment, or an embodiment combining software and hardware aspects. Moreover, the present disclosure may take the form of a computer program product implemented on one or more computer-usable storage mediums (including, but not limited to a magnetic disk memory and an optical memory, etc.) that contain computer-usable program codes therein.

The present disclosure is described with reference to flowcharts and/or block diagrams of the method, the apparatus (system), and the computer program product according to embodiments of the present disclosure. It should be understood that each flow and/or block in the flowcharts and/or the block diagrams, and combinations of the flows and/or the blocks in the flowcharts and/or the block diagrams can be implemented by computer-executable instructions. These computer-executable instructions may be provided to a processor of a general-purpose computer, a special-purpose computer, an embedded processor, or other programmable data-processing devices to produce a machine, such that the instructions executed by the processor of the computer or the other programmable data-processing device are configured to produce an apparatus for implementing the functions specified in one or more flows of the flowchart and/or one or more blocks of the block diagram.

These processor-executable instructions may also be stored in a processor-readable memory that can direct a computer or other programmable data processing devices to function in a particular manner, such that the instructions stored in the processor-readable memory produce an article of manufacture including an instruction apparatus that implements the functions specified in one or more flows of the flowcharts and/or one or more blocks of the block diagrams.

These processor-executable instructions may also be loaded into a computer or other programmable data processing devices, such that a series of operational steps are performed in the computer or other programmable devices to produce computer-implemented processing, such that the instructions executed in the computer or other programmable devices provide steps for implementing the functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of the claims of the present disclosure and their technical equivalents, the present disclosure is also intended to include such modifications and variations.

## Claims

1. A computing resources-based distributed network selection method, **characterized in that**, the method is applied to a terminal and comprises:
acquiring computing-resource information of computing-resource nodes from a computing-resource orchestration center or receiving computing-resource information of computing-resource nodes sent by the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, and the computing-resource information comprises computing-resource size, computing-resource service provided for the terminal, and a computing-resource node identifier;
determining a target RAN side according to the computing-resource information of the computing-resource nodes, and sending a first message to the target RAN side, wherein the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, wherein the second message is used for indicating that the target RAN side requests to access the target network node;
if a fourth message sent by the target RAN side is received, performing a network registration operation; wherein the fourth message is used for indicating agreeing that the terminal accesses the target network node through the target RAN side and the fourth message is determined to be sent when the target RAN side receives a third message sent by the target network node, wherein the third message is used for indicating agreeing that the target RAN side accesses the target network node.

2. The method according to claim 1, wherein the determining the target RAN side according to the computing-resource information of the computing-resource nodes comprises:
if the acquired or received computing-resource nodes at least comprise a RAN side, determining a target RAN side to be accessed according to computing-resource information of each RAN side; wherein the first message is used for indicating that the terminal requests to access the target RAN side;
if the acquired or received computing-resource nodes comprise a network node and do not comprise a RAN side, the target RAN side is a RAN side pre-accessed by the terminal; wherein the first message is used for indicating that the terminal requests to send computing-resource information, and the first message comprises computing-resource information of each network node in the acquired or received computing-resource nodes.

3. The method according to claim 1, wherein if the acquired or received computing-resource nodes comprise a RAN side and do not comprise a network node, and when the first message comprises pre-configured computing-resource information of at least one network node in the terminal, the target RAN side is configured to determine a target network node to be accessed according to the pre-configured computing-resource information of the at least one network node in the terminal; and when the first message does not comprise computing-resource information of a network node, the target RAN side is configured to determine a target network node to be accessed according to the pre-configured computing-resource information of the at least one network node locally;
if the acquired or received computing-resource nodes at least comprise a network node, the target RAN side is configured to determine a target network node to be accessed according to received computing-resource information of each network node in the first message.

4. The method according to claim 1, wherein the network node comprises a distributed network node and a centralized network node.

5. The method according to claim 1, wherein before acquiring the computing-resource information of the computing-resource nodes from the computing-resource orchestration center or receiving the computing-resource information of the computing-resource nodes sent by the computing-resource orchestration center, the method further comprises:
sending a fifth message to the computing-resource orchestration center, wherein the fifth message is used for indicating a request to subscribe to computing-resource size updated in real time by each computing-resource node; wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

6. The method according to any one of claims 1 to 5, wherein the method is applied to an extended reality (XR) service scenario; and the determining the target RAN side according to the computing-resource information of the computing-resource nodes further comprises:
determining the target RAN side according to the computing-resource nodes, computing-resource requirement information of the XR service scenario, and the computing-resource information; wherein the target RAN side is configured to determine the target network node to be accessed according to the received computing-resource information of each network node in the first message or the pre-configured computing-resource information of at least one network node locally and the computing-resource requirement information.

7. The method according to any one of claims 1 to 5, wherein the computing-resource information further comprises: locations of the computing-resource nodes and/or network performance parameters.

8. A computing resources-based distributed network selection method, **characterized in that**, the method is applied to a target RAN side, and the target RAN side is a RAN side determined to be accessed by a terminal or a RAN side pre-accessed by a terminal; and the method comprises:
receiving a first message sent by the terminal, wherein the first message is used for indicating that the terminal requests to access the target RAN side or that the terminal requests to send computing-resource information of each computing-resource node; the computing-resource information of the computing-resource nodes is acquired by the terminal from a computing-resource orchestration center or received from the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, the computing-resource information comprises computing-resource size, computing-resource service provided for the terminal, and a computing-resource node identifier;
determining a target network node to be accessed according to received computing-resource information of each network node in the first message or pre-configured computing-resource information of at least one network node locally, and sending a second message to the target network node; wherein the second message is used for indicating that the target RAN side requests to access the target network node;
if a third message sent by the target network node is received, sending a fourth message to the terminal; wherein the third message is used for indicating agreeing that the target RAN side accesses the target network node, and the fourth message is used for indicating agreeing that the terminal accesses the target network node through the target RAN side;
wherein the terminal is configured to, when receiving the fourth message, perform a network registration operation.

9. The method according to claim 8, wherein if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message comprises computing-resource information of each network node in the computing-resource nodes acquired or received by the terminal.

10. The method according to claim 8, wherein the determining the target network node to be accessed according to the received computing-resource information of each network node in the first message or the pre-configured computing-resource information of at least one network node locally comprises:
if the first message comprises computing-resource information of at least one network node, determining the target network node to be accessed according to the computing-resource information of the at least one network node in the first message, wherein the computing-resource information of the at least one network node in the first message is acquired or received by the terminal, or pre-configured in the terminal;
if the first message does not comprise computing-resource information of a network node, determining the target network node to be accessed according to the pre-configured computing-resource information of at least one network node locally.

11. The method according to claim 8, wherein the network node comprises a distributed network node and a centralized network node.

12. The method according to claim 8, wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

13. The method according to any one of claims 8 to 12, wherein the method is applied to an extended reality (XR) service scenario; and if the target RAN side is determined by the terminal according to the computing-resource nodes, computing-resource requirement information of the XR service scenario, and the computing-resource information, the determining the target network node to be accessed according to the received computing-resource information of each network node in the first message or the pre-configured computing-resource information of at least one network node locally further comprises:
determining the target network node to be accessed according to the received computing-resource information of each network node in the first message or the pre-configured computing-resource information of at least one network node locally and the computing-resource requirement information.

14. The method according to any one of claims 8 to 12, wherein the computing-resource information further comprises: locations of the computing-resource nodes and/or network performance parameters.

15. A computing resources-based distributed network selection apparatus, **characterized in that** the apparatus is applied in a terminal, and the apparatus comprises a memory, a transceiver, and a processor:
wherein the memory is configured to store a computer program; the transceiver is configured to transmit and receive data under control of the processor; and the processor is configured to read the computer program in the memory and perform the following operations:
acquiring computing-resource information of computing-resource nodes from a computing-resource orchestration center or receiving computing-resource information of computing-resource nodes sent by the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, and the computing-resource information comprises computing-resource size, computing-resource service provided for the terminal, and a computing-resource node identifier;
determining a target RAN side according to the computing-resource information of the computing-resource nodes, and sending a first message to the target RAN side, wherein the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, wherein the second message is used for indicating that the target RAN side requests to access the target network node;
if a fourth message sent by the target RAN side is received, performing a network registration operation; wherein the fourth message is used for indicating agreeing that the terminal accesses the target network node through the target RAN side and the fourth message is determined to be sent when the target RAN side receives a third message sent by the target network node, wherein the third message is used for indicating agreeing that the target RAN side accesses the target network node.

16. The apparatus according to claim 15, wherein the processor, when configured to determine the target RAN side according to the computing-resource information of the computing-resource nodes, specifically comprises:
if the acquired or received computing-resource nodes at least comprise a RAN side, determining a target RAN side to be accessed according to computing-resource information of each RAN side; wherein the first message is used for indicating that the terminal requests to access the target RAN side;
if the acquired or received computing-resource nodes comprise a network node and do not comprise a RAN side, the target RAN side is a RAN side pre-accessed by the terminal; wherein the first message is used for indicating that the terminal requests to send computing-resource information, and the first message comprises computing-resource information of each network node in the acquired or received computing-resource nodes.

17. The apparatus according to claim 15, wherein if the acquired or received computing-resource nodes comprise a RAN side and do not comprise a network node, and when the first message comprises pre-configured computing-resource information of at least one network node in the terminal, the target RAN side is configured to determine a target network node to be accessed according to the pre-configured computing-resource information of the at least one network node in the terminal; and when the first message does not comprise computing-resource information of a network node, the target RAN side is configured to determine a target network node to be accessed according to the pre-configured computing-resource information of the at least one network node locally;
if the acquired or received computing-resource nodes at least comprise a network node, the target RAN side is configured to determine a target network node to be accessed according to received computing-resource information of each network node comprised in the first message.

18. The apparatus according to claim 15, wherein the network node comprises a distributed network node and a centralized network node.

19. The apparatus according to claim 15, wherein the processor, before acquiring the computing-resource information of the computing-resource nodes from the computing-resource orchestration center or receiving the computing-resource information of the computing-resource nodes sent by the computing-resource orchestration center, specifically comprises:
sending a fifth message to the computing-resource orchestration center, wherein the fifth message is used for indicating a request to subscribe to computing-resource size updated in real time by each computing-resource node; wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

20. The apparatus according to any one of claims 15 to 19, wherein the apparatus is applied to an extended reality (XR) service scenario, the processor, when configured to determine the target RAN side according to the computing-resource information of the computing-resource nodes, further specifically comprises:
determining the target RAN side according to the computing-resource nodes, computing-resource requirement information of the XR service scenario, and the computing-resource information; wherein the target RAN side is configured to determine the target network node to be accessed according to the received computing-resource information of each network node in the first message or the pre-configured computing-resource information of at least one network node locally and the computing-resource requirement information.

21. The apparatus according to any one of claims 15 to 19, wherein the computing-resource information further comprises: locations of the computing-resource nodes and/or network performance parameters.

22. A computing resources-based distributed network selection apparatus, **characterized in that** the apparatus is applied to a target RAN side, and the target RAN side is a RAN side determined to be accessed by a terminal or a RAN side pre-accessed by a terminal; and the apparatus comprises: a memory, a transceiver, and a processor:
wherein the memory is configured to store a computer program; the transceiver is configured to transmit and receive data under control of the processor; and the processor is configured to read the computer program in the memory and perform the following operations:
receiving a first message sent by the terminal, wherein the first message is used for indicating that the terminal requests to access the target RAN side or that the terminal requests to send computing-resource information of each network node; the computing-resource information of the computing-resource nodes is acquired by the terminal from a computing-resource orchestration center or received from the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, the computing-resource information comprises computing-resource size, computing-resource service provided for the terminal, and a computing-resource node identifier;
determining a target network node to be accessed according to received computing-resource information of each network node in the first message or pre-configured computing-resource information of at least one network node locally, and sending a second message to the target network node; wherein the second message is used for indicating that the target RAN side requests to access the target network node;
if a third message sent by the target network node is received, sending a fourth message to the terminal; wherein the third message is used for indicating agreeing that the target RAN side accesses the target network node, and the fourth message is used for indicating agreeing that the terminal accesses the target network node through the target RAN side;
wherein the terminal is configured to, when receiving the fourth message, perform a network registration operation.

23. The apparatus according to claim 22, wherein if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message comprises computing-resource information of each network node in the computing-resource nodes acquired or received by the terminal.

24. The apparatus according to claim 22, wherein the processor, when configured to determine the target network node to be accessed according to the received computing-resource information of each network node in the first message or the pre-configured computing-resource information of at least one network node locally, specifically comprises:
if the first message comprises computing-resource information of at least one network node, determining the target network node to be accessed according to the computing-resource information of the at least one network node in the first message, wherein the computing-resource information of the at least one network node in the first message is acquired or received by the terminal, or pre-configured in the terminal;
if the first message does not comprise computing-resource information of a network node, determining the target network node to be accessed according to the pre-configured computing-resource information of at least one network node locally.

25. The apparatus according to claim 22, wherein the network node comprises a distributed network node and a centralized network node.

26. The apparatus according to claim 22, wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

27. The apparatus according to any one of claims 22 to 26, wherein the apparatus is applied to an extended reality (XR) service scenario; and if the target RAN side is determined by the terminal according to the computing-resource nodes, computing-resource requirement information of the XR service scenario, and the computing-resource information, the processor, when configured to determine the target network node to be accessed according to the received computing-resource information of each network node in the first message or the pre-configured computing-resource information of at least one network node locally, further specifically comprises:
determining the target network node to be accessed according to the received computing-resource information of each network node in the first message or the pre-configured computing-resource information of at least one network node locally and the computing-resource requirement information.

28. The apparatus according to any one of claims 22-26, wherein the computing-resource information further comprises: locations of the computing-resource nodes and/or network performance parameters.

29. A computing resources-based distributed network selection apparatus, **characterized in that** the apparatus is applied in a terminal, and the apparatus comprises:
a processing unit, configured to acquire computing-resource information of computing-resource nodes from a computing-resource orchestration center or receiving computing-resource information of computing-resource nodes sent by the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, and the computing-resource information comprises computing-resource size, computing-resource service provided for the terminal, and a computing-resource node identifier;
a determining unit, configured to determine a target RAN side according to the computing-resource information of the computing-resource nodes, and sending a first message to the target RAN side, wherein the first message is used for indicating that the terminal requests to access the target RAN side or that the terminal requests to send the computing-resource information; the target RAN side is configured to determine a target network node to be accessed according to received computing-resource information of each network node in the first message or pre-configured computing-resource information of at least one network node locally, and send a second message to the target network node, wherein the second message is used for indicating that the target RAN side requests to access the target network node;
a registration unit, configured to, when a fourth message sent by the target RAN side is received, perform a network registration operation; wherein the fourth message is used for indicating agreeing that the terminal accesses the target network node through the target RAN side and the fourth message is determined to be sent when the target RAN side receives a third message sent by the target network node, wherein the third message is used for indicating agreeing that the target RAN side accesses the target network node.

30. The apparatus according to claim 29, wherein the determining unit is specifically configured to:
when the acquired or received computing-resource nodes at least comprise a RAN side, determine a target RAN side to be accessed according to computing-resource information of each RAN side; wherein the first message is used for indicating that the terminal requests to access the target RAN side;
when the acquired or received computing-resource nodes comprise a network node and do not comprise a RAN side, the target RAN side is a RAN side pre-accessed by the terminal; wherein the first message is used for indicating that the terminal requests to send computing-resource information, and the first message comprises computing-resource information of each network node in the acquired or received computing-resource nodes.

31. The apparatus according to claim 29, wherein if the acquired or received computing-resource nodes comprise a RAN side and do not comprise a network node, and when the first message comprises pre-configured computing-resource information of at least one network node in the terminal, the target RAN side is configured to determine a target network node to be accessed according to the pre-configured computing-resource information of the at least one network node in the terminal; and when the first message does not comprise computing-resource information of a network node, the target RAN side is configured to determine a target network node to be accessed according to the pre-configured computing-resource information of the at least one network node locally;
if the acquired or received computing-resource nodes at least comprise a network node, the target RAN side is configured to determine a target network node to be accessed according to received computing-resource information of each network node in the first message.

32. The apparatus according to claim 29, wherein the network node comprises a distributed network node and a centralized network node.

33. The apparatus according to claim 29, wherein the processing unit is further configured to:
before acquiring the computing-resource information of the computing-resource nodes from the computing-resource orchestration center or receiving the computing-resource information of the computing-resource nodes sent by the computing-resource orchestration center, send a fifth message to the computing-resource orchestration center, wherein the fifth message is used for indicating a request to subscribe to computing-resource size updated in real time by each computing-resource node; wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

34. The apparatus according to any one of claims 29 to 33, wherein the apparatus is applied to an extended reality (XR) service scenario; and the determining unit is further specifically configured to:
determine the target RAN side according to the computing-resource nodes, computing-resource requirement information of the XR service scenario, and the computing-resource information; wherein the target RAN side is configured to determine the target network node to be accessed according to the received computing-resource information of each network node in the first message or the pre-configured computing-resource information of at least one network node locally and the computing-resource requirement information.

35. The apparatus according to any one of claims 29 to 33, wherein the computing-resource information further comprises: locations of the computing-resource nodes and/or network performance parameters.

36. A computing resources-based distributed network selection apparatus, **characterized in that** the apparatus is applied to a target RAN side, and the target RAN side is a RAN side determined to be accessed by a terminal or a RAN side pre-accessed by a terminal; and the apparatus comprises:
a receiving unit, configured to receive a first message sent by the terminal, wherein the first message is used for indicating that the terminal requests to access the target RAN side or that the terminal requests to send computing-resource information of each network node; the computing-resource information of the computing-resource nodes is acquired by the terminal from a computing-resource orchestration center or received from the computing-resource orchestration center; wherein the computing-resource orchestration center is configured to manage computing-resource information at least comprising computing-resource nodes and provide the computing-resource information to the terminal, the computing-resource nodes comprise each wireless access network (RAN) side and/or each network node, the network node serves as a core network side, the computing-resource information comprises computing-resource size, computing-resource service provided for the terminal, and a computing-resource node identifier;
a determining unit, configured to determine a target network node to be accessed according to received computing-resource information of each network node in the first message or pre-configured computing-resource information of at least one network node locally, and sending a second message to the target network node; wherein the second message is used for indicating that the target RAN side requests to access the target network node;
a sending unit, configured to, when a third message sent by the target network node is received, send a fourth message to the terminal; wherein the third message is used for indicating agreeing that the target RAN side accesses the target network node, and the fourth message is used for indicating agreeing that the terminal accesses the target network node through the target RAN side;
wherein the terminal is configured to, when receiving the fourth message, perform a network registration operation.

37. The apparatus according to claim 36, wherein if the target RAN side is a RAN side determined to be accessed by the terminal, the first message is used for indicating that the terminal requests to access the target RAN side;
if the target RAN side is a RAN side pre-accessed by the terminal, the first message is used for indicating that the terminal requests to send computing-resource information, and the first message comprises computing-resource information of each network node in the computing-resource nodes acquired or received by the terminal.

38. The apparatus according to claim 36, wherein the determining unit is specifically configured to:
when the first message comprises computing-resource information of at least one network node, determine the target network node to be accessed according to the computing-resource information of the at least one network node in the first message, wherein the computing-resource information of the at least one network node in the first message is acquired or received by the terminal, or pre-configured in the terminal;
when the first message does not comprise computing-resource information of a network node, determine the target network node to be accessed according to the pre-configured computing-resource information of at least one network node locally.

39. The apparatus according to claim 36, wherein the network node comprises a distributed network node and a centralized network node.

40. The apparatus according to claim 36, wherein the computing-resource orchestration center is specifically configured to: when monitoring a change in computing-resource size of any computing-resource node, update the computing-resource size of the corresponding computing-resource node in the managed computing-resource information in real time, and send the real-time updated computing-resource size of the computing-resource node to the terminal.

41. The apparatus according to any one of claims 36 to 40, wherein the apparatus is applied to an extended reality (XR) service scenario; and the determining unit is further specifically configured to:
when the target RAN side is determined by the terminal according to the computing-resource nodes, computing-resource requirement information of the XR service scenario, and the computing-resource information, determine the target network node to be accessed according to the received computing-resource information of each network node in the first message or the pre-configured computing-resource information of at least one network node locally and the computing-resource requirement information.

42. The apparatus according to any one of claims 36 to 40, wherein the computing-resource information further comprises: locations of the computing-resource nodes and/or network performance parameters.

43. A non-transitory readable storage medium, **characterized in that** the non-transitory readable storage medium stores a computer program, and the computer program is configured to cause a processor to perform the method according to any one of claims 1 to 14.
